# EUROPEAN PATENT APPLICATION

(11) **EP 1 748 637 A1**
(43) Date of publication of application: **31.01.2007**
(21) Application number: 06015485.3
(22) Date of filing: 25.07.2006
(51) Int. Cl.: H04N 1/00, H04N 1/21, G03G 15/00

(54) **Image scanning device and multi-function device with hinged display panel**

(30) Priority: 26.07.2005 JP 2005216242; 26.07.2005 JP 2005216448
(71) Applicant: Brother Kogyo Kabushiki Kaisha, Nagoya-shi, Aichi-ken 467-8561 (JP)
(72) Inventor: Ikeno, Takahiro c/o Brother Kogyo Kabushiki Kaisha, Aichi-ken 467-8561 (JP); Muraki, Motohito Brother Kogyo Kabushiki Kaisha, Aichi-ken 467-8561 (JP)
(74) Representative: Feldmeier, Jürgen

(57) **Abstract**

An image scanning device (1) is provided with a transparent plate (60), a contact image sensor (67), a scanning device casing (5), a cover member (7), and a display device (11). An image medium having an image to be scanned is placed on the transparent plate (60). The contact image sensor (67) is disposed below the transparent plate (60), and scans the image of the image medium placed on the transparent plate (60). The scanning device casing (6) houses the transparent plate (60) and the contact image sensor (67). The cover member (7) covers a top face of the transparent plate (60). The display device (11) is capable of moving between a lying position and a standing position. In a state where the display device (11) is positioned anywhere between the lying position and the standing position, a top end (11C) of the display device (11) is lower than a top end (131) of the cover member (7), and a bottom end (11D) of the display device (11) is higher than a bottom end (129) of the scanning device casing (5).

## Description

The present invention relates to an image scanning device. Further, the present invention relates to a multi-function device having at least an image scanning function and an image recording function. The term 'image' in the present specification should be interpreted in the broadest sense, and includes words, diagrams, figures, colors, etc. or a combination thereof.

Image scanning devices are widely known. Most image scanning devices have a transparent plate on which an image medium (for example, a document or a book) having an image is placed. A scanner is disposed below the transparent plate. The scanner scans the image of the image medium placed on the transparent plate. A cover member is disposed above the transparent plate. The cover member covers a top face of the transparent plate.
Most image scanning devices have a display device. Some image scanning devices use a display device capable of moving between a lying position and a standing position. With this configuration, the display device can be moved into a position easily visible to a user.

It is desirable for image scanning devices to be made thinner. The present inventors utilize a contact image sensor (CIS) as a scanner. In this case, space used for the scanner need not be as high as when a CCD is utilized as a scanner.
Even when a less height is needed for the scanner, the image scanning device becomes thick when the display device is positioned in a high position. To deal with this, the positioning of the display device is dealt with in the image scanning device of the present invention. That is, in a state where the display device is positioned anywhere between the lying position and the standing position, a top end of the display device is lower than a top end of the cover member, and a bottom end of the display device is higher than a bottom end of a scanning device casing (a casing that houses the transparent plate and the scanner).
The technique of the present invention utilizes the CIS and disposes the display device at a well-conceived position, and this technique thus realizes an image scanning device that is thin.

In a state where the display device is positioned in the lying position, it is preferred that the display device is substantially parallel to the horizontal plane. This configuration improves the visibility of the display device from above.
Further, in a state where the display device is positioned in the standing position, it is preferred that the display device is substantially parallel to the vertical plane. This configuration improves the visibility of the display device from the front.

It is difficult to see the content displayed by the display device when the display device is in an extremely low position. Furthermore, the display device may protrude above the cover member when the display device is in an extremely high position. It is preferred that the display device is located in a position that is not too high or too low. To deal with this, it is preferred that a configuration is utilized in which at least a part of the display device is lower than the transparent plate. In this case, a part of the display device may be lower than the transparent plate when the display device is in the standing position, and the other part of the display device may be higher than the transparent plate.
When this configuration is adopted, the display device can be disposed in a position that is not too high or too low.

The display device may comprise a pivot axis extending horizontally. In this case, the display device is capable of pivoting between the lying position facing upward and the standing position facing frontward.

The cover member may comprise an auto document feeder device that automatically feeds an image medium placed on the cover member along the contact image sensor.
With this configuration, the document placed on the cover member is fed automatically, and the image of the document is scanned during this feeding step. The image of the document can be scanned even if the cover member is not open.

The scanning device may comprise a plurality of operation keys. In this case, it is preferred that an area where the operation keys are disposed, and the display device positioned in the lying position, are disposed on substantially the same plane.
When this is done, the appearance of the scanning device is improved.

The display device may be capable of displaying image data input from an external device.
For example, image data stored in a transportable memory is displayed by the display device.

A multi-function device having the above image scanning device is useful. This multi-function device comprises the image scanning device and an image recording device capable of printing an image on a print medium. The image scanning device is disposed above the image recording device.
This multi-function device utilizes an image scanning device that is thin. As a result, a multi-function device that is thin can be realized.

The transparent plate may have a rectangular shape which is long in a left-right direction in the plan view of the multi-function device. The contact image sensor may be capable of moving in the left-right direction in order to scan the image of the image medium placed on the transparent plate. The image recording device may comprise a medium casing, a transferring device, a printing device, and a recording device casing. The medium casing is capable of housing the print medium that has a rectangular shape which is long in a front-rear direction in the plan view of the multi-function device. The transferring device transfers the print medium, which is housed in the medium casing, in the front-rear direction, and ejects the print medium to a front side of the multi-function device. The printing device prints the image on the print medium while the print medium is transferred by the transferring device. The recording device casing houses the medium casing, the transferring device, and the printing device.
It is preferred that, in the plan view of the multi-function device, the following configurations are adopted.
(1) The medium casing and the printing device at least partially overlap.
(2) The medium casing and the transparent plate at least partially overlap.
(3) The transparent plate and the display device do not overlap.
(4) The recording device casing protrudes beyond the transparent plate toward the front side of the multi-function device.
(5) At least a part of the display device is disposed between a front end of the recording device casing and a front end of the transparent plate.

The transparent plate is long in the left-right direction of the multi-function device. Further, the print medium that is housed by the medium casing is long in the front-rear direction of the multi-function device. As a result, the medium casing is also long in the front-rear direction of the multi-function device. The longitudinal direction of the transparent plate and the longitudinal direction of the medium casing are orthogonal. In this case, the multi-function device can have a plan shape that is closer to a square shape than in the case where longitudinal direction of the transparent plate and the longitudinal direction of the medium casing are parallel. If the multi-function device has a plan shape that is close to a square shape, many multi-function devices can be loaded efficiently into a container for transporting the multi-function devices. When a length of the multi-function device in the left-right direction and a length of the multi-function device in the front-rear direction have a ratio in a range 1:1 to 1.1:1, it can be said that the multi-function device has a substantially square shape.
With this configuration, there is a space above the image recording device and in front of the transparent plate (below, this space will be termed a predetermined space). The display device is disposed within this predetermined space. This configuration reduces the size of the multi-function device viewed from a plan view (below, this size will be termed a plan size).

The transferring device may transfer the print medium housed in the medium casing from the front side to a rear side of the multi-function device, turn the print medium, transfers the print medium that has been turned from the rear side to the front side, and eject the print medium. This configuration reduces the height of the multi-function device.
Furthermore, the transferring device may be disposed between a front end of the medium casing and a rear end of the medium casing. This configuration reduces the plan size of the multi-function device.

A rear face of the scanning device casing and a rear face of the recording device casing may be substantially flush with each other. In this case, it is preferred that these rear faces form a rear end of the multi-function device. When this configuration is adopted, the appearance of a rear face of the scanning device is improved.

It is preferred that, in the plan view of the multi-function device, at least half of the display device positioned in the lying position is disposed between the front end of the recording device casing and the front end of the transparent plate. It is more preferred that substantially all of the display device positioned in the lying position is disposed between the front end of the recording device casing and the front end of the transparent plate. With this configuration, the display device does not protrude to a great extent toward the front side beyond the recording device casing. As a result, this configuration reduces the plan size of the multi-function device.
In the case where the above configuration is adopted, it is preferred that, in the front-rear direction, a dimension of the display device positioned in the lying position is substantially equal to a distance between the front end of the recording device casing and the front end of the transparent plate. This configuration realizes a display that is large and easily visible.

The multi-function device may further comprise a slot capable of housing a memory device. In this case, the display device may display image data stored in the memory device. Further, in this case, the image recording device may print the displayed image data on the print medium.

The image scanning device may further comprise a plurality of operation keys. Each operation key is disposed above the image recording device. In the plan view of the multi-function device, the transparent plate and the operation keys do not overlap, and the operation keys are disposed between the front end of the recording device casing and the front end of the transparent plate.
The operation keys are disposed in the predetermined space. This configuration reduces the plan size of the multi-function device.

It is preferred that, in the left-right direction, a length of an area where the display device and the operation keys are disposed is within a length of the transparent plate.
With this configuration, the display device and the operation keys are disposed efficiently in the predetermined space.

At least two of the operation keys may be aligned along a right edge of the display device, and at least two of the operation keys may be aligned along a left edge of the display device. In this case, the display device may display a content of a command that can be input by operating each operation key at an adjacent area of each operation key.
With this configuration, the user can see the content of the command that can be input by operating each operation key.

A maximum size of the image medium placed within the transparent plate may be substantially the same as a maximum size of the print medium that the medium casing is capable of housing. The maximum size of the print medium and the maximum size of the image medium may be substantially 8.5 inch wide, which is equal to a short side of letter size, and 297 mm long, which is equal to a long side of A4 size.

FIG. 1 shows a perspective view of a multi-function device of the present embodiment.
FIG. 2 shows a cross-sectional view of a recording device.
FIG. 3 shows a plan view of the recording device.
FIG. 4 shows a perspective view of the multi-function device (in a state in which the cover member is open).
FIG. 5 shows the interior configuration of a scanning device.
FIG. 6 shows a cross-sectional view of the multi-function device.
FIG. 7 shows the interior configuration of the scanning device.
FIG. 8 shows a cross-sectional view of an ADF.
FIG. 9 shows a plan view of an operation panel.
FIG. 10 is a view showing a display device from the right side.
FIG. 11 shows a perspective view of the multi-function device (in a state in which the display device is in a standing position).
FIG. 12 shows a front view of the multi-function device.
FIG. 13 shows a view in which a scanning device casing is open with respect to a recording device casing.
FIG. 14 shows a control configuration of the multi-function device.
FIG. 15 shows the display device in a waiting state.
FIG. 16 shows a flowchart of a main function selecting process.
FIG. 17 shows the display device in the case where a media function is executed.
FIG. 18 shows the display device in the case where the media function is executed.
FIG. 19 shows the display device in the case where a copy function is executed.
FIG. 20 shows the display device in the case where a fax function is executed.
FIG. 21 shows the display device in the case where a scan function is executed.
FIG. 22 shows a plan view of main members of the multi-function device.

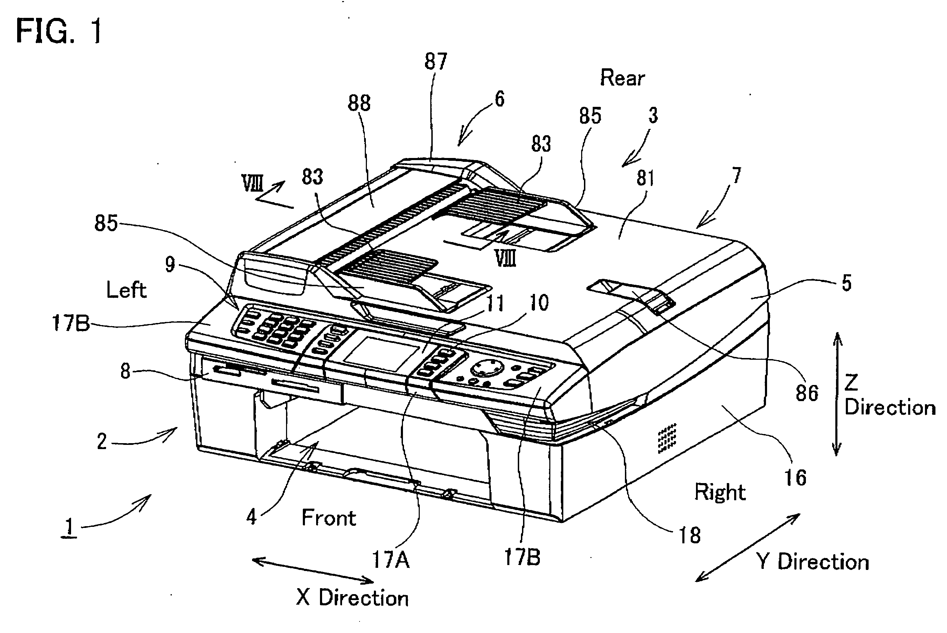

(Embodiments)
An embodiment of the present invention will now be described with reference to the drawings. FIG. 1 shows a perspective view of a multi-function device 1 of the present embodiment. The multi-function device 1 has a printer function, a scanner function, a copy function, and a fax function. The naulti-function device 1 comprises a recording device 2 and a scanning device 3. The recording device 2 is disposed at a lower side, and the scanning device 3 is disposed at an upper side.

The multi-function device 1 can be connected with, for example, a computer (not shown). The multi-function device 1 prints an image on a print medium based on image data or document data output from the computer. The multi-function device 1 can also be connected with an external device such as a digital camera, etc. Image data output from the digital camera can be input to the multi-function device 1, and the multi-function device 1 can print onto printing paper the image data that has been input. Further, a recording medium such as a memory card etc. can be inserted into the multi-function device 1. The multi-function device 1 can print onto printing paper the image data that is stored in the recording medium.
The multi-function device 1 is one embodiment for realizing the present invention. The configuration of the multi-function device 1 can be modified as required.

(Configuration of the recording device)
The recording device 2 comprises a recording device casing 16. The recording device casing 16 has an opening 4. The opening 4 is formed in a front face of the recording device casing 16.

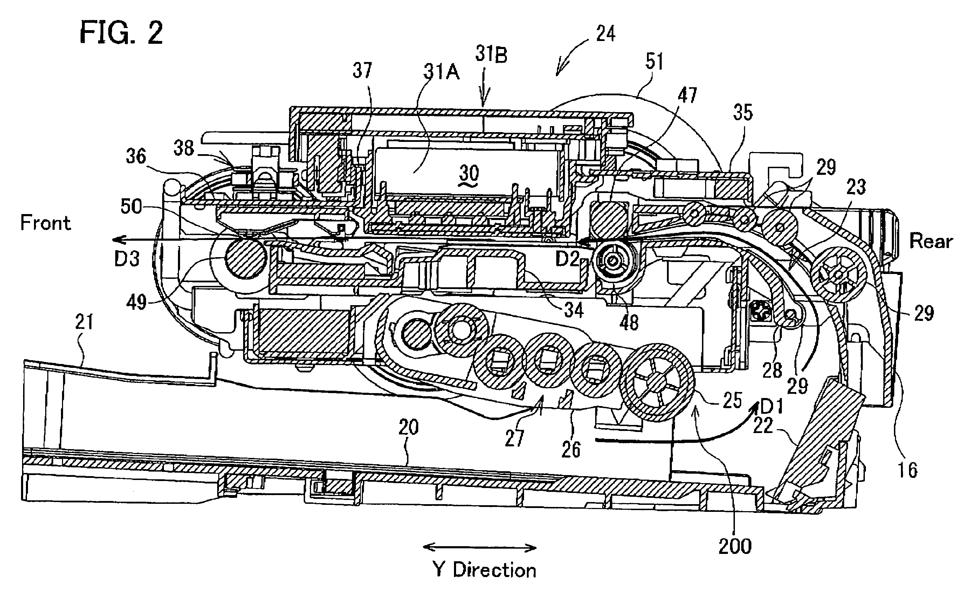

FIG. 2 shows a vertical cross-sectional view of the recording device 2. FIG. 2 does not show the entirety of the multi-function device 1.
The recording device 2 has a paper supply tray 20 and a paper catch tray 21. The paper supply tray 20 and the paper catch tray 21 can be inserted into and removed from the recording device casing 16 via the opening 4 (see FIG. 1). The recording device casing 16 can house the entirety of the trays 20 and 21. When the trays 20 and 21 are being housed within the recording device casing 16, front ends of the trays 20 and 21 are flush with a front face of the recording device casing 16. The paper catch tray 21 can be slid between a position which is fully housed within the recording device casing 16 and a position that is pulled forward from this position. It is possible to easily remove the printing paper housed in the paper catch tray 21 when this paper catch tray 21 has been slid forwards.
FIG. 1 shows a state in which the paper supply tray 20 and the paper catch tray 21 are not housed in the recording device casing 16.

The paper supply tray 20 is capable of housing printing paper prior to printing. The paper supply tray 20 can house standard size printing paper. For example, it can house A4 size (210 x 297 mm), B5 size (182 x 257 mm), letter size (8.5 x 11 inches), etc. In the present embodiment, the paper supply tray 20 can house A4 size, B5 size, or letter size alternatively. That is, the maximum size in the longer direction that the paper supply tray 20 can house is 297mm, and the maximum size in the shorter direction that the paper supply tray 20 can house is 8.5 inch.
The paper supply tray 20 houses rectangular printing paper. The longer side of the printing paper, when housed within the paper supply tray 20, extends in the front-rear direction (Y direction). As a result, the paper supply tray 20 also has a shape extending in the Y direction. The paper supply tray 20 has a separating inclined plate 22. If a plurality of sheets of printing paper is transferred in the direction of the arrow D1, the separating inclined plate 22 separates the uppermost sheet from the remaining sheets. The separating inclined plate 22 forms a rear end of the paper supply tray 20.
The paper catch tray 21 is disposed above the paper supply tray 20. The paper catch tray 21 is supported by the paper supply tray 20 in a manner allowing sliding.

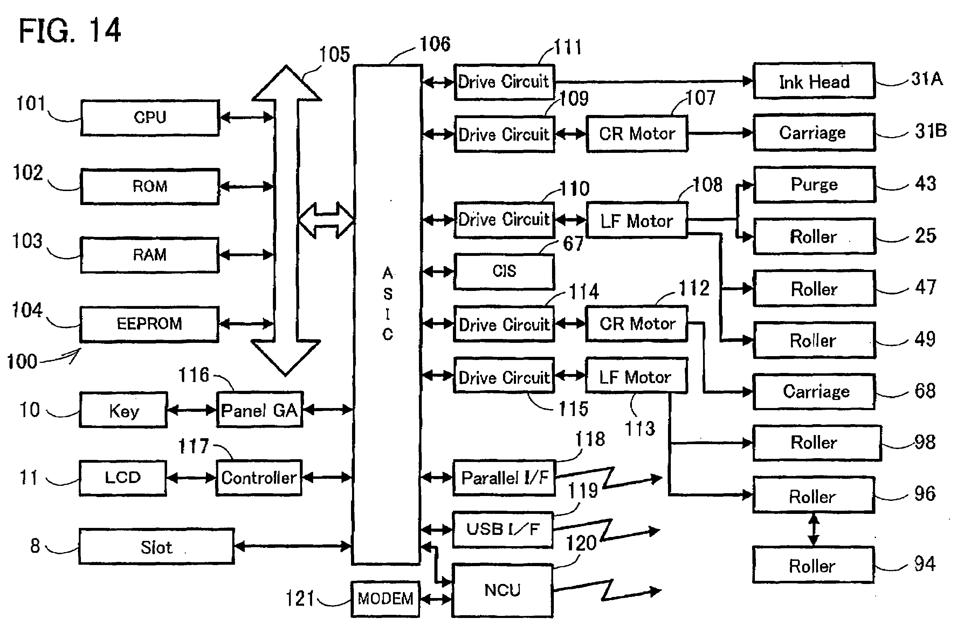

The recording device 2 comprises a transferring device 200 that transfers the printing paper housed in the paper supply tray 20. The transferring device 200 transfers the printing paper housed in the paper supply tray 20 towards a rear face of the multi-function device 1 (in the direction of the arrow D1), turns the printing paper that has been transferred in the direction D1 (in the direction of the arrow D2), then transfers the printing paper that has been transferred in the direction D2 towards a front face of the multi-function device 1 (in the direction of the arrow D3). The transferring device 200 has a plurality of rollers 25, 29, 47, 48, 49, and 50, a guide 28, etc. All of the elements 25, 29, etc. that comprise the transferring device 200 are disposed between the rear end (the separating inclined plate 22) and a front end (not shown) of the paper supply tray 20.
The roller 25 is disposed above the paper supply tray 20. The roller 25 is supported in a manner allowing rotation by an arm 26. The arm 26 can pivot toward the paper supply tray 20 and away from the paper supply tray 20. The arm 26 is positioned upwards when the paper supply tray 20 is not being housed in the recording device casing 16. The arm 26 is urged downwards when the paper supply tray 20 is being housed in the recording device casing 16. The uppermost sheet of printing paper housed in the paper supply tray 20 is thus caused to make contact with the roller 25. The roller 25 is connected with a driving transmission mechanism 27. The driving transmission mechanism 27 has a plurality of gears. The driving transmission mechanism 27 is driven by an LF motor 108 (see FIG. 14). The roller 25 transfers, in the direction of the arrow D1, the uppermost sheet of printing paper housed in the paper supply tray 20.

The guide 28 is disposed above the separating inclined plate 22. The guide 28 forms a transfer path 23 of the printing paper. The transfer path 23 extends upwards from the separating inclined plate 22, and curves toward the front face of the multi-function device 1. The guide 28 delineates an outer guiding face and an inner guiding face of the transfer path 23.
A plurality of the rollers 29 is disposed along the transfer path 23. The printing paper that has been transferred in the direction of the arrow D1 is transferred in the direction of the arrow D2 by the rollers 29. The printing paper that has been transferred in the direction of the arrow D2 enters between a pair of rollers 47 and 48. The rollers 47 and 48 transfer the printing paper toward the front face of the multi-function device 1 (in the direction of the arrow D2). The printing paper that has been transferred in the direction of the arrow D2 passes above a platen 34. The printing paper that has passed the platen 34 enters between the rollers 49 and 50. The rollers 49 and 50 transfer the printing paper toward the front face of the multi-function device 1 (in the direction of the arrow D3). The printing paper is thus ejected onto the paper catch tray 21. The printing paper is printed by a printing device (to be described) located between the rollers 47, 48 and the rollers 49, 50 (i.e. directly above the platen 34).
The roller 47 and the roller 49 are driven by the LF motor 108 (see FIG. 14). The roller 47 and the roller 49 rotate in synchrony. The roller 47 is connected with an encoder disk 51. A rotary encoder (not shown) detects the encoder disk 51 by means of a photo interrupter. The roller 47 and the roller 49 are controlled based on the signals detected by the rotary encoder.
The roller 48 is urged toward the roller 47. The roller 48 rotates following the printing paper that is transferred by the roller 47.
The roller 50 is urged toward the roller 49. The roller 50 rotates following the printing paper that is being transferred by the roller 49. Bumps are formed on a roller face of the roller 50 such that the image printed on the printing paper will not be damaged.

The recording device 2 comprises the printing device 30. The printing device 30 prints images (illustrations or words) onto the printing paper that is being transferred by the transferring device 200. The printing device 30 is disposed above the paper supply tray 20. The printing device 30 comprises an ink head 31A, a carriage 31B, guide rails 35 and 36, etc.
The ink head 31A is mounted in the carriage 31B. The ink head 31A is capable of discharging ink downwards. The ink is thus applied to an upper face of the printing paper that is positioned between the rollers 47, 48 and the rollers 49, 50.
The carriage 31B can move in a direction perpendicular to the plane of the page of FIG. 2 (the X direction of FIG. 1). The guide rail 35 is disposed at a rear side of the carriage 31B. The guide rail 36 is disposed at a front side of the carriage 31B. The guide rails 35 and 36 extend parallel to the direction perpendicular to the plane of the page of FIG. 2. The carriage 31B can move along the guide rails 35 and 36.

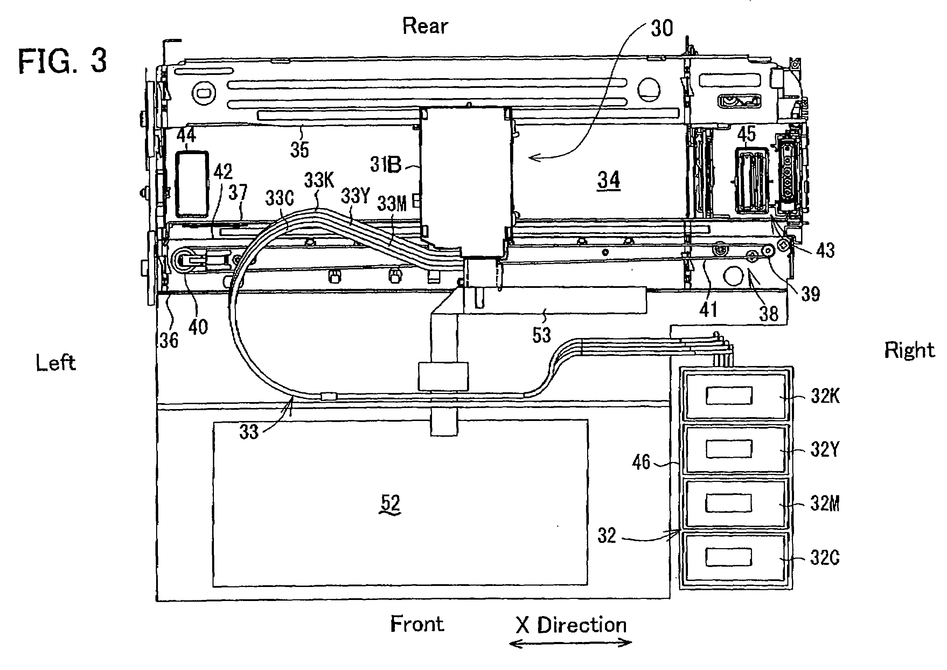

FIG. 3 shows a plan view of the recording device 2. The length of the guide rail 35 in the X direction is greater than the range of movement of the carriage 31 B in the X direction. The guide rail 35 supports the carriage 31B in a manner allowing its sliding.
The length of the guide rail 36 in the X direction is substantially the same as the guide rail 35. The guide rail 36 supports the carriage 31 B in a manner allowing its sliding. One end 37 of the guide rail 36 (an end part at the rear face side of the multi-function device 1) is bent substantially at a right angle toward an upper side of the multi-function device 1 (toward a closer side of a direction perpendicular to the plane of the page of FIG. 3). The carriage 31 B has a pair of rollers (not shown). The end 37 of the guide rail 36 is gripped between this pair of rollers.
A belt mechanism 38 is disposed above the guide rail 36. The belt mechanism 38 has a pair of pulleys 39 and 40, and a belt 41. An axis of the pulley 39 is connected with a CR motor 107 (see FIG. 14). When the pulley 39 rotates, the belt 41 rotates. When the belt 41 rotates, the pulley 40 rotates following this rotation. The belt 41 of the present embodiment has a ring shape (is an endless belt). However, a belt that has an end may equally well be utilized.
The carriage 31B is fixed to the belt 41. When the belt 41 rotates, the carriage 31B moves along the guide rails 35 and 36. The ink head 31A mounted on the carriage 31B thus moves in the X direction.
An encoder strip 42 of the linear encoder is disposed along the end 37 of the guide rail 36. The linear encoder detects the encoder strip 42 by means of a photo interrupter. The movement of the carriage 31B is controlled based on the signals detected by the linear encoder.

The recording device 2 has an ink tank housing space 46 and four ink tubes 33 (33C, 33M, 33Y, and 33K).
The ink tank housing space 46 is formed within the recording device casing 16. The ink tank housing space 46 is disposed at the front face side and the right side of the recording device casing 16. Four ink tanks 32 (32C, 32M, 32Y, and 32K) are disposed in the ink tank housing space 46. The ink tanks 32 each house one of the following ink colors: cyan (C), magenta (M), yellow (Y) and black (Bk). The ink tanks 32 are a cartridge type in which ink is housed within a case made from synthetic resin. The ink tanks 32 can be attached to (or removed from) an upper side of the ink tank housing space 46.
One end of each ink tube 33 is connected with one of the ink tanks 32. The other end of each ink tube 33 is connected with the ink head 31A. The ink in the ink tanks 32 is delivered to the ink head 31A via the ink tubes 33. The ink tubes 33 are made from synthetic resin. The ink tubes 33 can bend as the carriage 31B moves.

The length of the platen 34 in the X direction is greater than the length of the printing paper in the X direction. The printing paper passes between a right end and a left end of the platen 34.
A purge mechanism 43 and a waste tray 44 are disposed above the platen 34 (at a closer side of a direction perpendicular to the plane of the page of FIG. 3). The purge mechanism 43 and the waste tray 44 are disposed in positions that do not interfere with the printing paper that is being transferred.
The purge mechanism 43 is disposed above a right end part of the platen 34. The purge mechanism 43 sucks air bubbles or extraneous materials from nozzles of the ink head 31A. The purge mechanism 43 has a cap 45. The cap 45 is capable of covering a nozzle face of the ink head 31A. The cap 45 is connected with a pump mechanism (not shown).
The waste tray 44 is disposed above a left end part of the platen 34. The ink head 31A can be made to recover its ink discharging ability by discharging ink toward the waste tray 44. This operation is called flushing.

The recording device 2 has a control substrate 52 and a flat cable 53. One end of the flat cable 53 is connected with the control substrate 52. The other end of the flat cable 53 is connected with the ink head 31A. The flat cable 53 delivers signals from the control substrate 52 to the ink head 31A. The flat cable 53 has a conductor and a synthetic resin film (an insulating film) covering the conductor. The flat cable 53 has a part extending in the X direction from the carriage 31 B. This part bends upwards and downwards in a U shape. This part is not fixed to other parts, and can change shape following the movement of the carriage 31B.

(Configuration of the scanning device)
As shown in FIG. 1, the scanning device 3 comprises a scanning device casing 5, a cover member 7, etc. The cover member 7 is disposed above the scanning device casing 5. The cover member 7 is connected, in a manner allowing its rotation, with the scanning device casing 5. FIG. 1 shows a state in which the cover member 7 is closed.

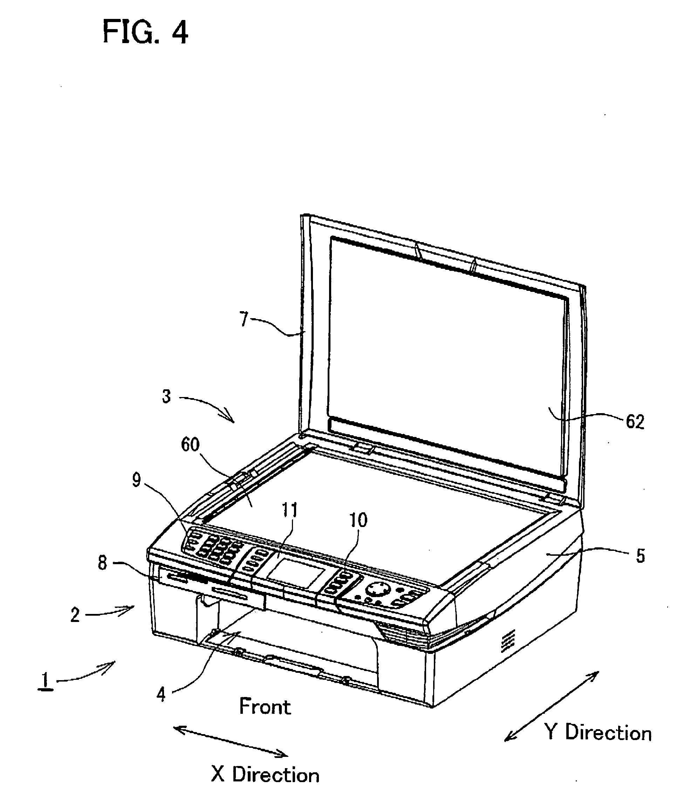

FIG. 4 shows a state in which the cover member 7 is open. When the cover member 7 is open, a platen glass 60 is exposed. The platen glass 60 is a transparent glass plate. The platen glass 60 is housed in the scanning device casing 5 with an upper face of this platen glass 60 exposed. The platen glass 60 has a rectangular shape extending in a left-right direction. That is, the platen glass 60 has a rectangular shape that is long in the X direction.
Documents and books can be placed on the platen glass 60. The image of the document etc. placed on the platen glass 60 is scanned. That is, the scanning device 3 of the present embodiment functions as an FBS (Flatbed Scanner). In this embodiment, the length of the platen glass 60 in the X direction is substantially the same as the length of A4 size in the longer direction, and the length of the platen glass 60 in the Y direction is substantially the same as the length of letter size in the shorter direction. Therefore, both A4 size and letter size can be placed on the platen glass 60.
Further, as will be described in detail later, the cover member 7 has an Auto Document Feeder (ADF) 6. The documents placed on the cover member 7 are transferred into the scanning device 3 by the ADF 6. The scanning device 3 can scan the images of the documents that are transferred by the ADF 6.
The cover member 7 can cover a top face of the platen glass 60 (see FIG. 1). As shown in FIG. 4, the cover member 7 has a pressing member 62 for pressing the documents placed on the platen glass 60. The pressing member 62 has a sponge and a white plate, etc.

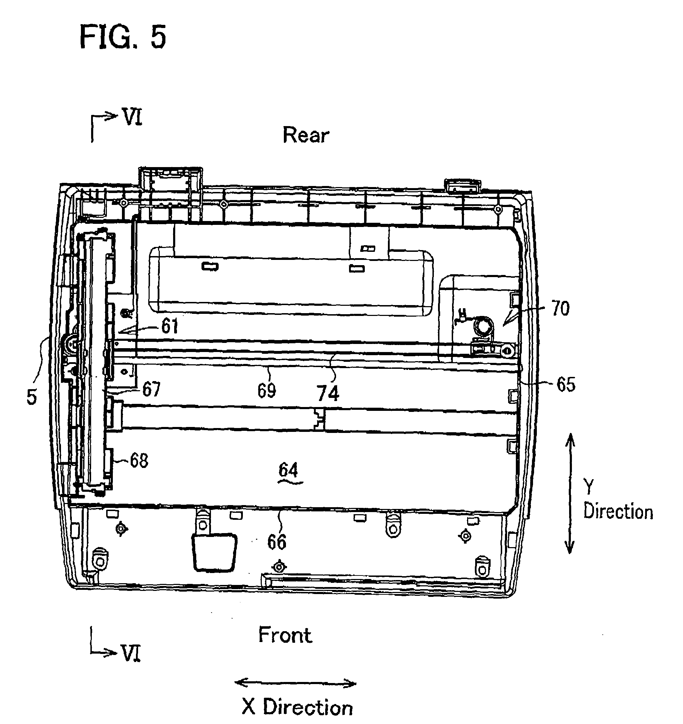

FIG. 5 shows a plan view of the scanning device 3. FIG. 5 omits the cover member 7 and the platen glass 60. The scanning device casing 5 houses a scanning unit 61. The scanning unit 61 is disposed below the platen glass 60. The scanning unit 61 can scan the documents placed on the platen glass 60 by moving in the X direction. Further, the scanning unit 61 can scan the documents transferred by the ADF 6.
The scanning device casing 5 has a base plate 64, side walls 65, a partition plate 66, etc. The side walls 65 and the partition plate 66 extend upward from the base plate 64 (to a closer side in the direction perpendicular to the plane of the page of FIG. 5). The partition plate 66 separates a region in which the scanning unit 61 is housed from a region in which a substrate etc. of an operation panel 9 (to be described) is housed.

The scanning unit 61 comprises a Contact Image Sensor (CIS) 67, a carriage 68, a guide shaft 69, and a belt mechanism 70.
The CIS 67 irradiates light from a light source onto the document, and uses a lens to lead light reflected from the document to a photoelectric conversion element. The photoelectric conversion element outputs an electric signal that corresponds to the intensity of the reflected light. The CIS 67 fits relatively tightly with a lower face of the platen glass 60. The CIS 67 is mounted in the carriage 68.
The carriage 68 can move in the X direction. When the carriage 68 moves in the X direction, the CIS 67 also moves in the X direction.
The guide shaft 69 extends in the X direction. The carriage 68 fits with the guide shaft 69 in a manner allowing sliding.
The belt mechanism 70 extends along the guide shaft 69. The belt mechanism 70 has a timing belt 74. The timing belt 74 is connected with the carriage 68. When the belt mechanism 70 is driven, the carriage 68 moves along the guide shaft 69.

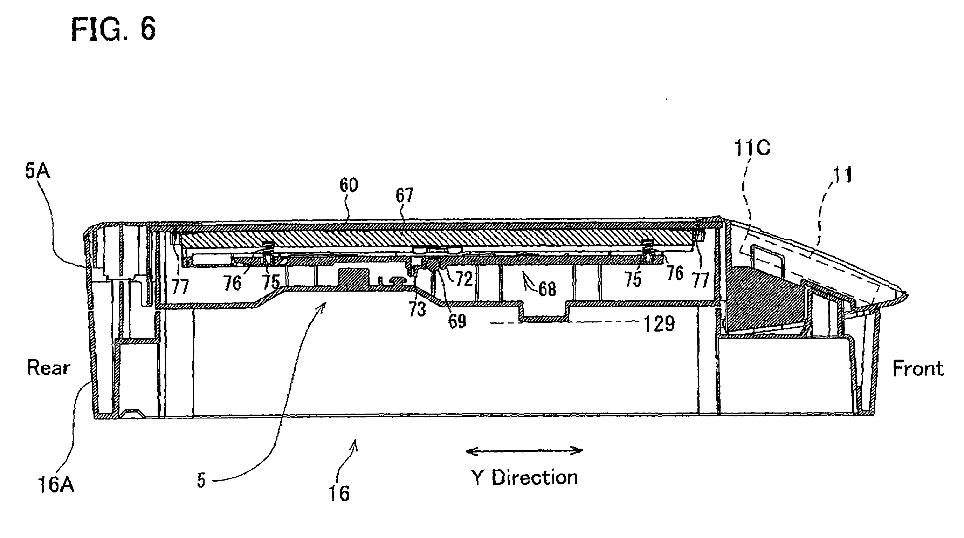

FIG. 6 shows a cross-sectional view along the line VI-VI of FXG. 5. The platen glass 60 is not shown in FIG. 5, but is shown in FIG. 6.
The carriage 68 is disposed below the CIS 67. The carriage 68 has a shaft receiving part 72 into which the guide shaft 69 fits. The carriage 68 is supported by the guide shaft 69. The carriage 68 has a belt connecting part 73. The belt connecting part 73 grips the timing belt 74 of the belt mechanism 70. The timing belt 74 and the carriage 68 are thus linked.
The carriage 68 has a pair of spring receiving parts 75. One of the spring receiving parts 75 is disposed at a front face side, and the other of the spring receiving parts 75 is disposed at a rear face side. The spring receiving parts 75 house a coil spring 76. The coil spring 76 is disposed between the CIS 67 and the carriage 68. The CIS 67 is pushed onto a lower face of the platen glass 60 by the coil spring 76.
The CIS 67 has a pair of rollers 77. One of the rollers 77 is disposed at the front face side, and the other of the rollers 77 is disposed at the rear face side. The rollers 77 make contact with the lower face of the platen glass 60. The rollers 77 allow the CIS 67 to move smoothly while making contact with the platen glass 60.
As shown clearly in FIG. 6, a rear face 5A of the scanning device casing 5 and a rear face 16A of the recording device casing 16 are substantially flush with each other. The rear faces 5A and 16A are substantially parallel on a vertical plane. The rear faces 5A and 16A form a rear end of the multi-function device 1.

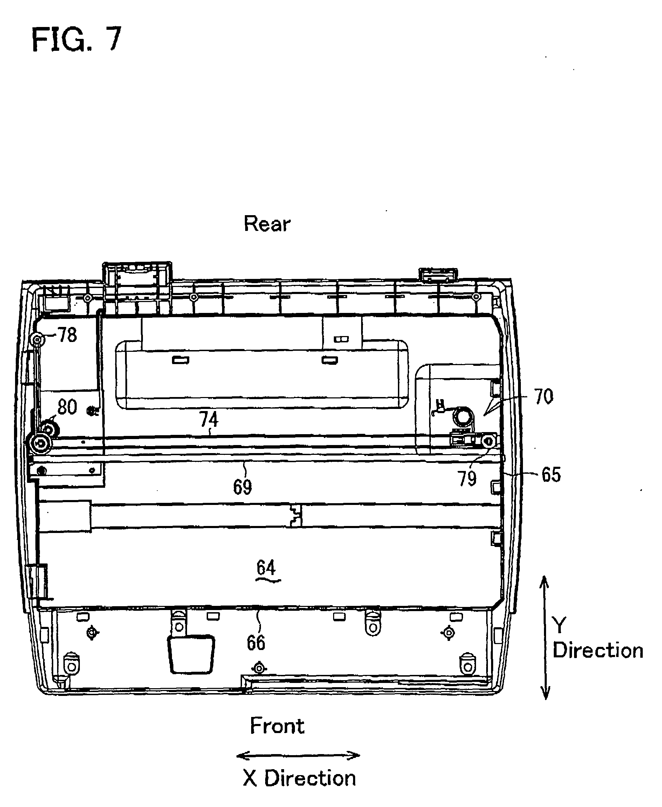

FIG. 7 shows a figure that the CIS 67 and the carriage 68 are omitted from FIG. 5. The belt mechanism 70 has three pulleys 78, 79, and 80. The pulley 78 is disposed at the left side and the rear face side. The pulley 80 is disposed at a front side of the pulley 78. The pulley 79 is disposed at a right side of the pulley 80. The timing belt 74 is an endless belt. However, a belt that has an end may equally well be utilized. The timing belt 74 extends across the three pulleys 78, 79, and 80. Cogs are formed at an inner circumference side of the timing belt 74.
The pulley 78 is connected with a CR motor 112 (see FIG. 14). The timing belt 74 rotates when the pulley 78 rotates. When the timing belt 74 rotates, the pulleys 79 and 80 rotate following this rotation. The belt connecting part 73 (see FIG. 6) is disposed between the pulley. 79 and the pulley 80. The belt connecting part 73 grips the timing belt 74 that is present between the pulley 79 and the pulley 80.

Next, the configuration of the cover member 7 will be described in detail with reference to FIG. 1. The cover member 7 has the ADF 6. The ADF 6 has a document tray 81 and a document catch tray 83. The ADF 6 feeds documents housed in the document tray 81 to the document catch tray 83. The documents are scanned by the CIS 67 during this feeding process.
The document tray 81 is disposed below the document catch tray 83. One sheet or a plurality of sheets of documents can be placed in the document tray 81. The maximum size of the documents that can be placed in the document tray 81 is A4 size or letter size. When rectangular documents have been placed in the document tray 81, the longer side of these documents extends in the X direction and the shorter side thereof extends in the Y direction.
The ADF 6 has a pair of guides 85. The pair of guides 85 is separated by a distance in the Y direction. The pair of guides 85 extends upward from the document tray 81. The documents are placed between the pair of guides 85. When one of guides 85 is slid toward the other of the guides 85, the other of the guides 85 also slides toward the one of the guides 85. When the one of the guides 85 is slid away from the other of the guides 85, the other of the guides 85 also slides away from the one of the guides 85. The pair of guides 85 determines the position of the document placed on the document tray 81.

The document catch tray 83 is fixed to the pair of guides 85. The document catch tray 83 catches the documents that have been ejected by the ADF 6. The length of the document catch tray 83 in the X direction is shorter than the length of the A4 size (or letter size) document in the X direction. As a result, a part of the A4 size (or letter size) document extends beyond the document catch tray 83. The part that extends beyond the document catch tray 83 is caught by the document tray 81. In this case, a part of the documents that have been ejected overlaps with the documents placed in the document tray 81. However, the document tray 81 and the document catch tray 83 are formed at two levels (an upper level and a lower level). As a result, a distinction is retained between the documents prior to scanning and the documents that have been scanned. A compact ADF is realized because the document catch tray 83 is short.
A stopper 86 is formed at a right end part of the document tray 81. The stopper 86 can move between a lying position and a standing position. In FIG. 1, the stopper 86 is in the lying position. When the stopper 86 is in the standing position, the stopper 86 stops documents that have moved to the right beyond the document catch tray 83. It is thus possible to prevent documents from moving beyond the cover member 7. The configuration wherein the documents are stopped by the stopper 86 can reduce the size of the cover member 7. In the case where the stopper 86 is not required, the stopper 86 can be moved to the lying position. In this state, the stopper 86 and the document tray 81 are disposed on the same plane. Since the stopper 86 does not protrude from the document tray 81, the multi-function device 1 has a compact form.

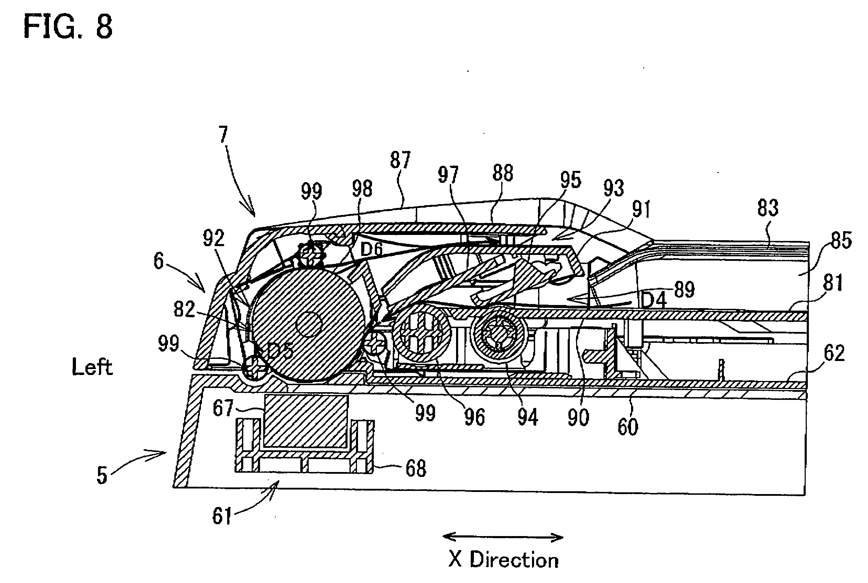

The configuration of the ADF 6 will be described in detail with reference to FIG. 8. FIG. 8 is a cross-sectional view along the line VIII-VIII of FIG. 1. In FIG. 8, the recording device 2 is not shown.
The ADF 6 comprises an ADF main body 87 and an ADF cover 88. As shown in FIG. 1, a pair of ADF main bodies 87 is formed. The ADF cover 88 is disposed between the pair of ADF main bodies 87. The ADF cover 88 can be opened with respect to the ADF main bodies 87. A document transfer path 82 is formed in the ADF main bodies 87 and the ADF cover 88.
An opening 89 is formed to the left of the document tray 81. The documents placed on the document tray 81 are transferred from the opening 89 to the document transfer path 82.
A base face of the opening 89 is delineated by a guide plate 90. The guide plate 90 is formed integrally with the ADF main bodies 87. An upper face of the opening 89 is delineated by a subdividing plate 91. The subdividing plate 91 is disposed in the ADF cover 88. Documents that have been inserted from the opening 89 into the ADF 6 are transported in the direction shown by the sequence of arrows D4, D5, and D6.

The components that comprise the document transfer path 82 are rollers 94, 96, 98, and 99, nip members 95 and 97, a guide 92, the subdividing plate 91, etc. Other members may equally well be utilized to form the document transfer path 82. For example, the number or location of the rollers may be modified. As another example, rollers may be utilized instead of the nip members. Other known transferring means may be utilized.
The roller 94 is exposed above the guide plate 90. The roller 94 is disposed in the center in the Y direction (see FIG. 1) of the opening 89. The roller 96 is disposed to the left of the roller 94. The roller 96 is exposed above the guide plate 90. The roller 94 and the roller 96 are connected with an LF motor 113 (see FIG. 14). The roller 94 and the roller 96 have the same diameter, and rotate at the same speed. A clutch is disposed between the roller 94 and the LF motor 113. The roller 94 can therefore idle for one cycle.
The nip member 95 faces the roller 94. A right end part of the nip member 95 is supported by the subdividing plate 91 in a manner that allows pivoting. The nip member 95 is a pad that is slightly shorter than the roller 94 in the axial direction of the roller 94. The nip member 95 is urged downward by a spring (not shown). The nip member 95 pushes the document toward the roller 94.
The nip member 97 faces the roller 96. A right end part of the nip member 97 is supported by the subdividing plate 91 in a manner that allows pivoting. The nip member 97 is a pad that is slightly shorter than the roller 96 in the axial direction of the roller 96. The nip member 97 is urged downward by a spring (not shown). The nip member 97 pushes the document toward the roller 96.
The nip members 95 and 97 can use rollers rather than pads. However, the nip members can be made smaller when pads are used than when rollers are used. Further, it is easy to adjust flexibility when pads are used.

The documents placed on the document tray 81 are transferred in the direction of the arrow D4 by the rollers 94 and 96. The documents that have been transferred in the direction of the arrow D4 enter between the roller 98 and the three rollers 99. The roller 98 is connected with the LF motor 113 (see FIG. 14). The rollers 99 are supported by the ADF main bodies 87 or the ADF cover 88 in a manner allowing rotation. The rollers 99 are urged toward the roller 98 by springs (not shown). When the roller 98 rotates, the rollers 99 rotate following this rotation.
The guide 92 is disposed along the roller 98. The guide 92 guides the documents that have been transferred by the roller 98. When the roller 98 rotates, the documents are transferred in the direction of the arrows D5 and D6. The documents that have been transferred in the direction of the arrow D6 reach an exit hole 93. The exit hole 93 is formed between a bottom face of the ADF cover 88 and a top face of the subdividing plate 91. The documents that have been transferred in the direction of the arrow D6 pass through the exit hole 93 and reach the document catch tray 83.

The ADF cover 88 has a pivot axis to the right of the roller 94. The ADF cover 88 can be pivoted upwards from the state shown in FIG. 8. When the ADF cover 88 is pivoted upwards, the subdividing plate 91 and the nip members 95 and 97 also move upwards. The subdividing plate 91 thus moves away from the guide plate 90, the nip member 95 moves away from the roller 94, and the nip member 97 moves away from the roller 96. Paper jams in the document transfer path 82 can be cleared by opening the ADF cover 88. Further, maintenance can be performed.

The scanning unit 61 is disposed below the roller 98. In the case where the scanning device 3 is used as an FBS, the carriage 68 moves along the platen glass 60 in the X direction. The CIS 67 thus scans the images of the documents placed on the platen glass 60.
In the case where the ADF 6 is used, the carriage 68 is halted below the roller 98. The ADF 6 feeds the document along the CIS 67. The CIS 67 scans the image of the documents fed by the ADF 6.
A miniature optical image sensor such as a CCD (Charge Coupled Device) utilizes a mirror for obtaining a long optical path. The CIS 67 is a line sensor in which photoelectric conversion elements are aligned in the scanning direction. The CIS 67 has a shorter optical path length than the CCD. A scanning unit 61 using the CIS 67 is more compact in both the X direction and the Y direction than a scanning unit 61 using the CCD.
In the case where the ADF 6 is used, the cover member 7 is closed with respect to the scanning device casing 5. In the case where documents are scanned using only the ADF 6 (in the case where the FBS is not used), it is not necessary to open the cover member 7. Since it is not necessary to open the cover member 7, space for opening the cover member 7 is not needed above the multi-function device 1. The scanning device 3 can be utilized even when there is no space above the multi-function device 1.

As shown in FIG. 1, the scanning device 3 has the operation panel 9. The configuration of the operation panel 9 will be described in detail below. The operation panel 9 is disposed at a front side of the scanning device casing 5. The operation panel 9 has a plurality of keys 10, a display device 11, a first fixed part 17A and a second fixed part 17B.
A user can input various commands by operating the keys 10. The multi-function device 1 operates on the basis of the commands that have been input. The multi-function device 1 can be connected with a computer. Commands that are output from the computer can be input to the multi-function device 1 via a printer driver or a scanner driver. The multi-function device 1 can operate on the basis of the commands output from the computer.
A slot 8 is formed in the front face of the multi-function device 1. The slot 8 is capable of housing various types of memory card. The multi-function device 1 can input the image data stored in the memory card. The multi-function device 1 can display the image data input from the memory card on the display device 11. Further, the multi-function device 1 can print the image data displayed on the display device 11 onto printing paper. The user can input these commands using the operation panel 9.

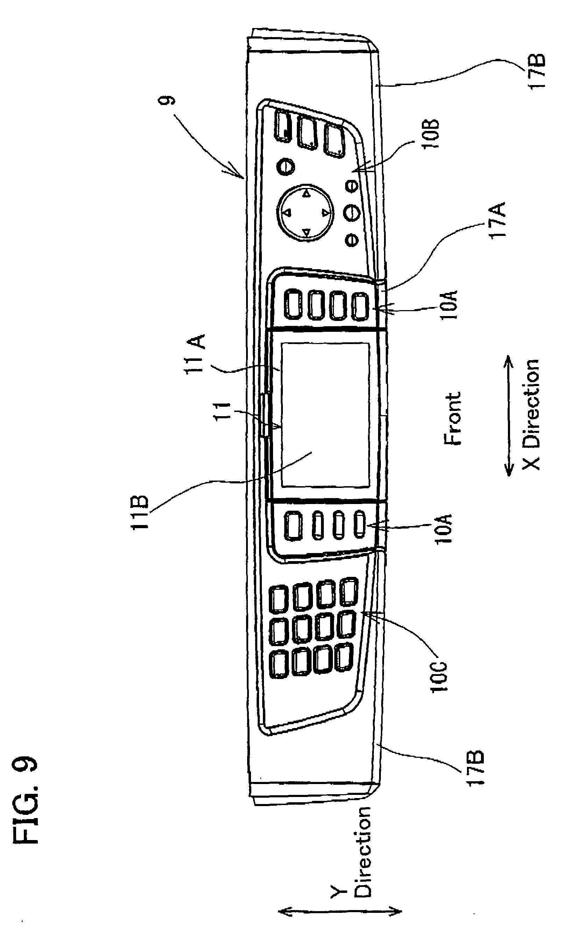

FIG. 9 is a plan view of the operation panel 9. Although this will be described in detail later, the display device 11 can move between a lying position and a standing position. FIG. 9 shows the display device 11 in the lying position. In the plan view, the display device 11 has a rectangular shape in which the long sides extend in the X direction. The display device 11 is disposed at substantially the entire area of the width, in the Y direction, of the operation panel 9. As described above, the display device 11 can display the image data input from the memory card. The display device 11 has a large configuration in order to display the image data clearly.
The display device 11 is disposed at the center, in the X direction, of the operation panel 9 (of the multi-function device 1). The display device 11 is shorter in the X direction than the length of the operation panel 9 in the X direction. The keys 10 can be disposed at the left and right of the display device 11. The plurality of keys 10 is disposed in a well balanced manner on the operation panel 9.
The first fixed part 17A is fixed to the recording device casing 16 (see FIG. 1). The second fixed part 17B is disposed at a left side and a right side of the first fixed part 17A. The second fixed part 17B is fixed to the scanning device casing 5 (see FIG. 1).

The operation panel 9 has keys 10A disposed at the first fixed part 17A, keys 10B disposed at the second fixed part 17B located at a right side, and keys 10C disposed at the second fixed part 17B located at a left side.
Four of the keys 10A are aligned in the Y direction along the right edge of the display device 11, and four of the keys 10A are aligned in the Y direction along the left edge of the display device 11. The keys 10A are mode keys for switching mode, such as a fax mode, copy mode, scan mode, etc. The keys 10A also function as setting keys for inputting settings of these modes. A plurality of inputs is assigned to each of the keys 10A. The content input via the keys 10A is displayed on the display device 11.
The keys 10B are a power source key, a navigation key, a start key, a stop key, etc. The power source of the multi-function device 1 can be turned on and off by operating the power source key. Operating the navigation key allows (1) the retrieval of abbreviated dialing for fax numbers and telephone numbers, (2) volume modification for speech, warning tones, and input confirmation tones, and (3) settings to be confirmed. Operating the start key allows the printer or the scanner to be started. Operating the stop key halts ongoing processes.
The keys 10C comprise dial keys, etc. Operating the keys 10C allows fax numbers and telephone numbers to be input.
The above functions of the keys 10A to 10C are examples, and these keys can be made to realize other functions.

The display device 11 comprises a casing 11A and an LCD (Liquid Crystal Display) 11B. The casing 11A supports the LCD 11B. The display device 11 is supported by the first fixed part 17A in a manner allowing pivoting.

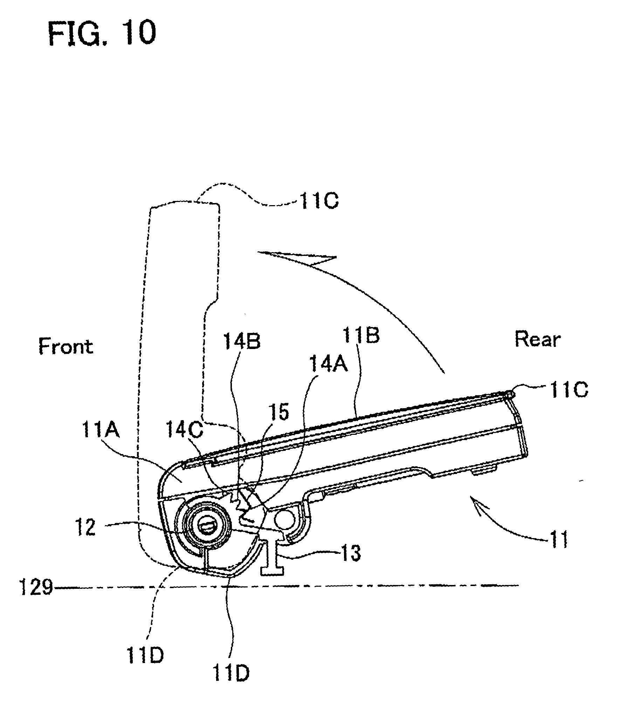

FIG. 10 is a view showing the display device 11 from the right side of FIG. 9. The casing 11A of the display device 11 has a pivot axis 12. The pivot axis 12 is supported by the first fixed part 17A (see FIG. 9). The pivot axis 12 extends in the X direction. The pivot axis 12 is disposed at an end part of a front face side of the display device 11. The display device 11 can be pivoted between a lying position (the position shown by the solid line in FIG. 10) and a standing position (the position shown by the broken line in FIG. 10).
One end of a flat cable (not shown) is connected with a rear face of the display device 11. The other end of the flat cable is connected with the control substrate 52 (see FIG. 3). The display device 11 displays a predetermined image based on electrical signals output from the control substrate 52.

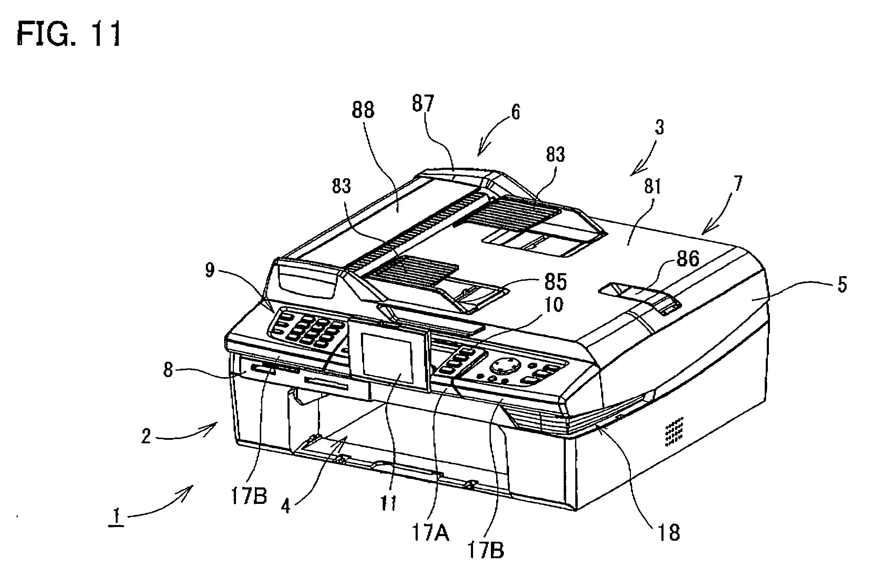

A fitting member 13 makes contact with the pivot axis 12. The fitting member 13 is fixed to the first fixed part 17A (see FIG. 9). The fitting member 13 has a plurality of claws 14A, 14B, and 14C. The claws 14A, 14B, and 14C are aligned in the circumference direction of the pivot axis 12.
A plate spring 15 is disposed near the fitting member 13. The plate spring 15 is fixed to the casing 11A. A tip end of the plate spring 15 has a shape substantially the same as the shape between two adjoining claws 14 (for example, 14A and 14B).
When the display device 11 is in the lying position, the plate spring 15 is disposed lower than the claw 14A. The plate spring 15 must pass over the claws 14A, 14B, and 14C for the display device 11 that is in the lying position to be pivoted to the standing position. The display device 11 remains in the lying position as long as force capable of passing the plate spring 15 over the claw 14A is not applied to the display device 11.
When the plate spring 15 passes over the claw 14A, the tip end of the plate spring 15 enters between the claws 14A and 14B. The display device 11 remains in this position as long as force capable of passing the plate spring 15 over the claw 14A or the claw 14B is not applied to the display device 11.
When the plate spring 15 passes over the claw 14B, the tip end of the plate spring 15 enters between the claws 14B and 14C. The display device 11 remains in this position as long as force capable of passing the plate spring 15 over the claw 14B or the claw 14C is not applied to the display device 11.
When the plate spring 15 passes over the claw 14C, the display device 11 reaches the standing position. The display device 11 remains in the standing position as long as force capable of passing the plate spring 15 over the claw 14C is not applied to the display device 11. FIG. 11 shows a perspective view of the multi-function device 1 in the case where the display device 11 is in the standing position.
The positions of the display device 11 can be modified in a stepwise manner in the present embodiment. That is, a tilt mechanism is realized in the present embodiment.

As shown in FIG. 1, when the display device 11 is in the lying position, the region in which the keys 10 are disposed is on substantially the same plane as the display device 11. When the display device 11 is in the lying position, the display device 11 does not protrude upwards beyond the operation panel 9. In this case, the appearance of the operation panel 9 is improved. Further, when the display device 11 is in the lying position, the display device 11 is substantially parallel with a horizontal plane. In this state, visibility of the display device 11 from above is improved.
Further, when the display device 11 is in the lying position, a top end 11C (see FIG. 10) of the display device 11 is positioned at approximately the same height as the platen glass 60. This state is shown clearly in FIG. 6. If the top end 11C of the display device 11 was higher than the platen glass 60, the document extending frontward beyond the platen glass 60 may be lifted by the display device 11 positioned even in the lying position. In this state, the light may enter between the document and the platen glass 60. In this state, the scanning quality deteriorates. In the present embodiment, the document is not lifted by the display device 11 in the lying position. Therefore, the good scanning quality can be obtained.

When the display device 11 is in the standing position, the display device 11 is substantially parallel with respect to a vertical plane. This is shown clearly in FIG. 10. In this state, visibility from a front side is improved.

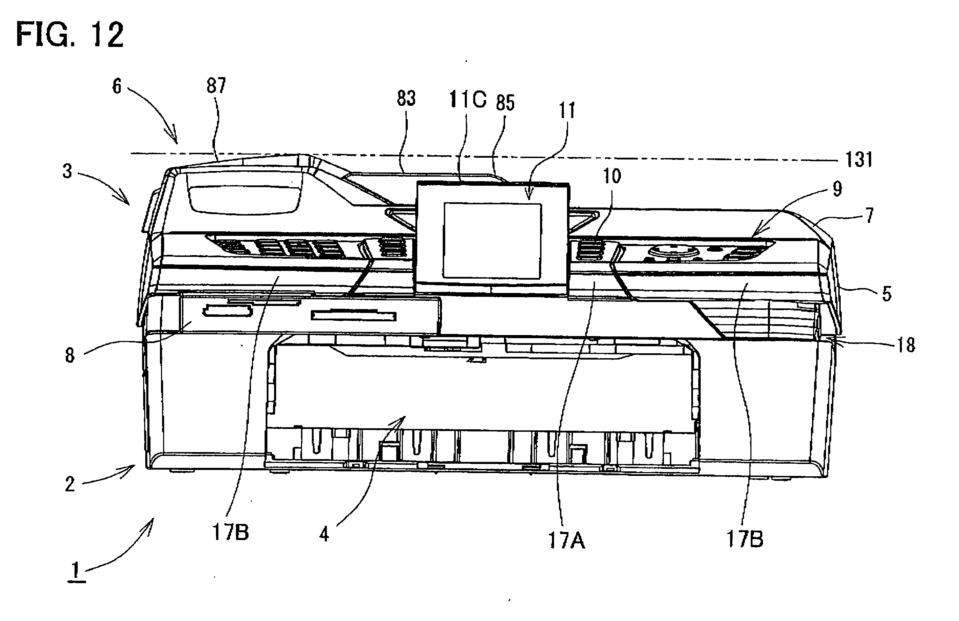

FIG. 12 shows a front view of the multi-function device 1 in the case where the display device 11 is in the standing position. When the display device 11 is in the standing position, the top end 11C of the display device 11 is lower than a top end 131 of the cover member 7 (a top end of the ADF main bodies 87). That is, the top end 11C of the display device 11 is lower than the top end 131 of the cover member 7 when the display device 11 is positioned anywhere between the lying position and the standing position.
It is difficult to see the display device 11 from above in the case where there is no space above the multi-function device 1. As a result, when there is no space above the multi-function device 1, the user maintains the display device 11 in the standing position. In the present embodiment, the top end 11C of the display device 11 is lower than the top end 131 of the cover member 7 even when the display device 11 is in the standing position. The display device 11 can therefore be pivoted to the standing position even when there is absolutely no space above the multi-function device 1.
The reference number 129 in FIG. 10 refers to a bottom end of the scanning device casing 5. The position of the bottom end 129 can be seen clearly in FIG. 6. As is clear from FIG. 10, a bottom end 11D of the display device 11 is higher than the bottom end 129 of the scanning device casing 5 when the display device 11 is positioned anywhere between the lying position and the standing position.
As is clear from FIG. 12, a part of the display device 11 may be higher than the platen glass 60 (see FIG. 4, etc.) when the display device 11 is in the standing position, and the remaining part of the display device 11 may be lower than the platen glass 60. With the present embodiment, the display device 11 is disposed in a position that is neither too high nor too low. Therefore, the height of the scanning device 3 is not affected by the display device 11 which is capable of pivoting.

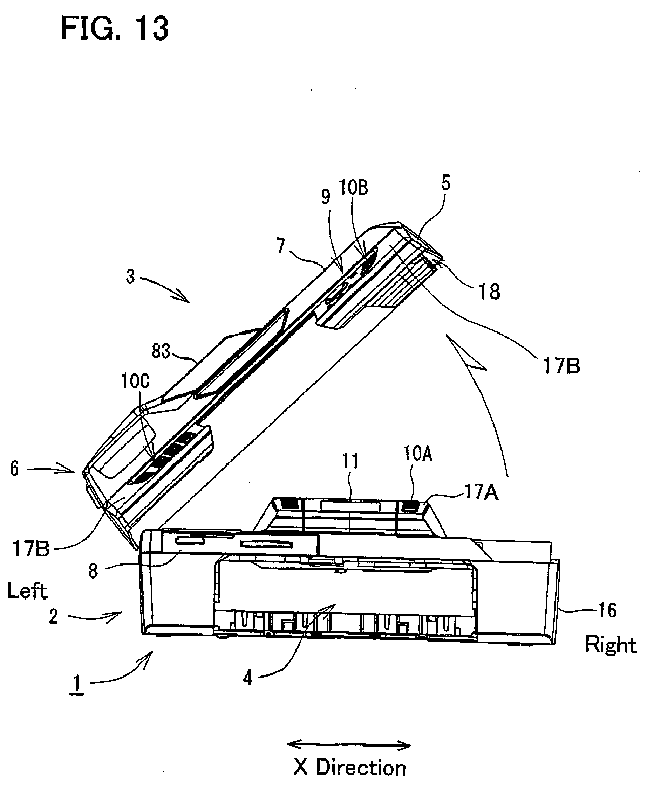

FIG. 13 shows a view in which the scanning device casing 5 is open with respect to the recording device casing 16. The scanning device casing 5 is linked with a left end part of the recording device casing 16 by a hinge mechanism (not shown). Concave parts 18 are formed in a right end part of the scanning device casing 5. The user can apply a finger to the concave parts 18 to lift the scanning device casing 5. The scanning device casing 5 is thus opened with respect to the recording device casing 16.
The concave parts 18 are formed at both a front face and a side face of the scanning device casing 5. The concave part 18 at the front face and the concave part 18 at the side face communicate. The user can apply a finger to either the concave part 18 at the front face or the concave part 18 at the side face.
The interior of the recording device casing 16 is exposed when the scanning device casing 5 is opened. In this state, the ink tanks 32 (see FIG. 3) can be exchanged. Further, maintenance of the recording device 2 can be performed.
The keys 10B and 10C of the operation panel 9 are supported by the second fixed part 17B. The second fixed part 17B is fixed to the scanning device casing 5. As a result, when the scanning device casing 5 rotates, the keys 10B and 10C also rotate. By contrast, the display device 11 and the keys 10A of the operation panel 9 are supported by the first fixed part 17A. The first fixed part 17A is fixed to the recording device casing 16. As a result, the display device 11 and the keys 10A do not rotate when the scanning device casing 5 rotates.

(Configuration of the control part)
FIG. 14 shows a control configuration of the multi-function device 1. A controller 100 controls the operation of the multi-function device 1. The controller 100 functions as a microcomputer. The controller 100 comprises a CPU (Central Processing Unit) 101, a ROM (Read Only Memory) 102, a RAM (Random Access Memory) 103, an EEPROM (Electrically Erasable and Programmable ROM) 104, etc. The controller 100 is connected with an ASIC (Application Specific Integrated Circuit) 106 via a bus 105.
The ROM 102 stores programs etc. for controlling the operations of the multi-function device 1. The RAM 103 temporarily stores data that the CPU 101 uses for executing the aforementioned programs. The ASIC 106 generates signals (for example, phase exciting signals). The signals generated by the ASIC 106 are output to drive circuits 109, 110, 111, 114, and 115.

The drive circuit 109 is connected with the CR motor 107. The CR motor 107 is connected with the carriage 31B of the recording device 2. The signals output from the ASIC 106 are input to the drive circuit 109, and the drive circuit 109 generates electrical signals for rotating the CR motor 107. The electrical signals output from the drive circuit 109 are input to the CR motor 107. The rotating force of the CR motor 107 is transmitted to the carriage 31B via the belt mechanism 38 (see FIG. 3).
The drive circuit 110 is connected with the LF motor 108. The LF motor 108 is connected with the rollers 25, 47, and 49 (see FIG. 2) and the purge mechanism 43 (see FIG. 3) of the recording device 2. The signals output from the ASIC 106 are input to the drive circuit 110, and the drive circuit 110 generates electrical signals for rotating the LF motor 108. The electrical signals output from the drive circuit 110 are input to the LF motor 108. The rotating force of the LF motor 108 is transmitted to the rollers 25, 47, 49 and the purge mechanism 43 via a drive mechanism. The drive mechanism comprises a gear, a drive shaft, etc.
The drive circuit 111 is connected with the ink head 31A (see FIG. 2). The ink head 31A discharges ink toward the printing paper with a predetermined timing. The signals output from the ASIC 106 are input to the drive circuit 111, and the driving of the ink head 31 A is controlled based on the signals that have been input.
The drive circuit 114 is connected with the CR motor 112. The CR motor 112 is connected with the carriage 68 of the scanning device 3 (see FIG. 5). The signals output from the ASIC 106 are input to the drive circuit 114, and the drive circuit 114 generates electrical signals for rotating the CR motor 112. The electrical signals output from the drive circuit 114 are input to the CR motor 112. The rotating force of the CR motor 112 is transmitted to the carriage 68 via a known mechanism.
The drive circuit 115 is connected with the LF motor 113. The LF motor 113 is connected with the rollers 94, 96, and 98 of the ADF 6 (see FIG. 8). The signals output from the ASIC 106 are input to the drive circuit 115, and the drive circuit 115 generates electrical signals for rotating the LF motor 113. The electrical signals output from the drive circuit 115 are input to the LF motor 113. The rotating force of the LF motor 113 is transmitted to the rollers 94, 96, and 98 via a known mechanism.

Although this is not shown, the following are connected with the ASIC 106: a rotary encoder for detecting the amount of rotation of the roller 47 of the recording device 2, a linear encoder for detecting the amount of movement of the carriage 31A, etc. The CPU 101 outputs commands to the ASIC 106 based on the signals detected from these encoders. Based on these commands, the ASIC 106 generates signals that are output to the CR motor 107 and the LF motor 108.
The CIS 67 is connected with the ASIC 106. Based on commands output from the CPU 101, the ASIC 106 outputs electrical signals for making the light source of the CIS 67 emit light. Based on these signals, the CIS 67 makes the light source emit light with a predetermined timing. Further, the ASIC 106 outputs timing signals for causing image data to be output from the photoelectric conversion element. Based on these signals, the CIS 67 outputs the image data that has been transferred by the photoelectric conversion element. The image data output from the CIS 67 is input to the ASIC 106.

A panel gate array 116 is connected with the ASIC 106. The panel gate array 116 is connected with the plurality of keys 10. When the panel gate array 116 detects that the keys 10 have been operated, the panel gate array 116 outputs a predetermined code signal. There are fixed key codes for each key 10, and each of the keys 10A has a plurality of key codes. The key codes of the keys 10A are set to be linked with the display of the display device 11. When the key codes are output from the panel gate array 116, the CPU 101 follows a key process table to execute control processes. The key process table stores combinations of the key codes and the control processes. The key process table is stored in, for example, the ROM 102.
An LCD controller 117 is connected with the ASIC 106. The controller 117 controls the display device 11. Based on the commands output from the CPU 101, the controller 117 makes the display device 11 display information relating to the operation of the recording device 2 or the scanning device 3.
The slot 8, a parallel interface 118, and a USB interface 119 are connected with the ASIC 106. The slot 8 is capable of housing a memory card. The parallel interface 118 sends data to a computer and receives data from the computer via a parallel cable or a USB cable. An NCU (Network Control Unit) 120 and a MODEM 121 are connected with the ASIC 106. The NCU 120 and the MODEM 121 realize the fax function.

Next, the relationship between the keys 10A and the displays on the display device 11 will be described. The display device 11 displays the content of commands in a region close to the keys 10A. These commands are capable of being input by operating the keys 10A. By looking at the display device 11, the user can ascertain the content of the commands that can be input by operating the keys 10A.

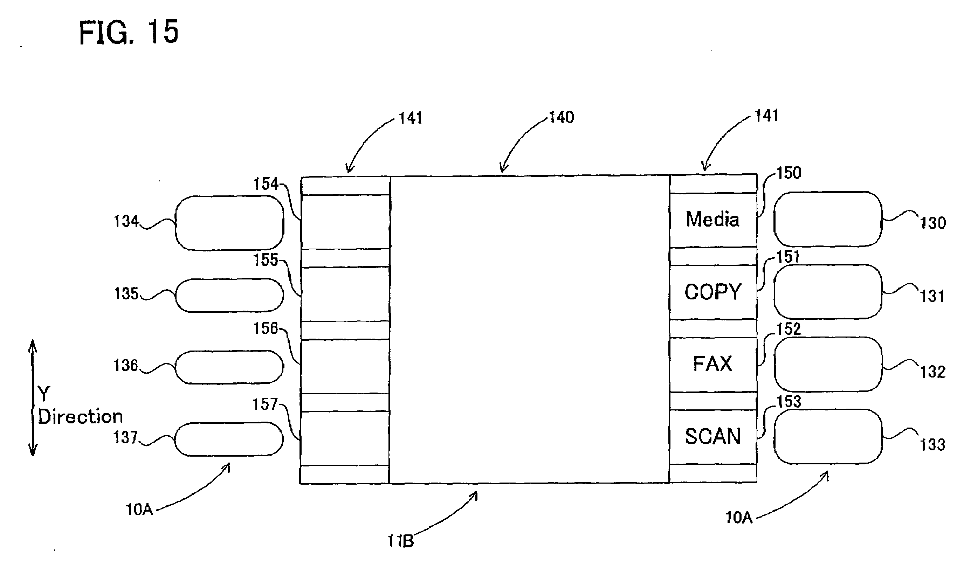

FIG. 15 shows the LCD 11B of the display device 11, and the surroundings thereof. Four of the keys 10A are disposed at a left side of the LCD 11B, and four of the keys 10A are disposed at a right side thereof. The four keys 130 to 133 disposed at the right side of the LCD 11B are mode keys.

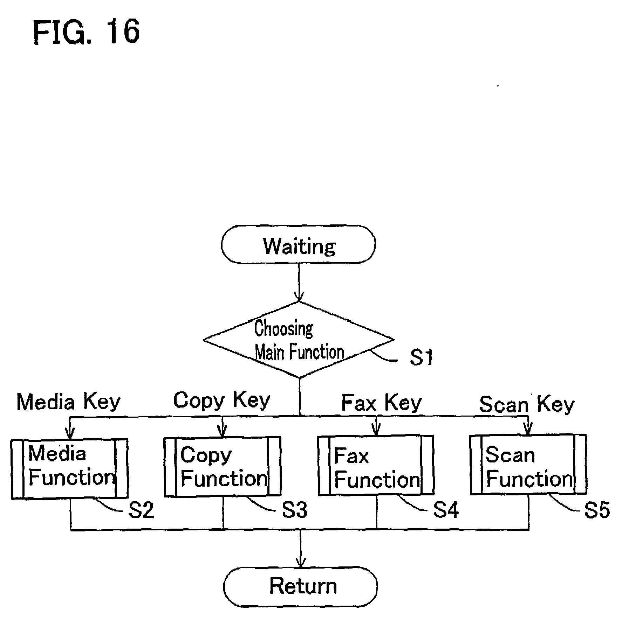

FIG. 16 is flowchart showing functions realized when the mode keys 130 to 133 are operated. The user can select the main function of the multi-function device 1 by operating the mode keys 130 to 133 (S1). The mode keys 130 to 133 correspond to a media function (S2), a copy function (S3), a FAX function (S4), or a scan function (S5).
Four keys 134 to 137 (see FIG. 15) are disposed at the left side of the LCD 11B, and are used for inputting settings for each function. Further, the keys 134 to 137 are utilized for switching screens.

The LCD 11B has a content display region 140 and key input display regions 141. The content display region 140 is disposed in the center of the LCD 11B. In a waiting state, the content display region 140 displays the current date and time. When the function (the media function, copy function, etc.) has been selected, the content display region 140 displays various settings or images.
The key input display regions 141 are disposed to the left and right sides of the content display region 140. The key input display regions 141 display the content of commands that can be input by operating the keys 130 to 137. In the present embodiment, the keys 130 to 137 are disposed to the left and right sides of the LCD 11B. As a result, the key input display regions 141 are disposed to both the left and right sides of the content display region 140. If the keys were disposed only at the left side (or the right side) of the LCD 11B, the key input display region 141 is disposed only at the left side (or the right side) of the content display region 140.

The key input display regions 141 arc divided into a plurality of sub regions 150 to 157. The key input display region 141 at the right side has four sub regions 150 to 153 aligned in the Y direction. The key input display region 141 at the left side has four sub regions 154 to 157 aligned in the Y direction. The sub regions 150 to 157 correspond to the keys 130 to 137. For example, the sub region 150 corresponds to the key 130. Similarly, the other sub regions 151 to 157 each correspond to one of the keys 131 to 137.
Each of the sub regions 150 to 157 displays the content of the commands that can be input by operating the closest key out of the keys 130 to 137. By looking at the content displayed in the sub regions 150 to 157, the user can see the content of the commands that can be input by operating the keys 130 to 137.

FIG. 15 shows the content displayed in the waiting state. Although this is not shown, the content display region 140 displays the current date and time. The sub region 150 displays 'Media'. This means that the media function will be executed by operating the key 130. The sub region 151 displays 'COPY'. This means that the copy function will be executed by operating the key 131. The sub region 152 displays 'FAX'. This means that the fax function will be executed by operating the key 132. The sub region 153 displays 'SCAN'. This means that the scan function will be executed by operating the key 133.
In FIG. 15, nothing is displayed in the sub regions 154 to 157. This type of blank display occurs when there are no commands to be input by operating the keys 134 to 137. When there are commands that can be input by operating the keys 134 to 137, the content of these commands is displayed in the sub regions 154 to 157.
Moreover, the contents or the words displayed in the present embodiment are examples. Other contents or words (language) may be adopted.

The controller 100 (see FIG. 14) hierarchically maintains commands that can be input by operating the keys 130 to 137. The first hierarchy comprises selection commands for selecting the functions. The second hierarchy comprises commands for settings of the functions. That is, 'Media', 'COPY', 'FAX', and 'SCAN' displayed in the sub regions 150 to 153 in the waiting state constitute the first hierarchy. When the first hierarchy commands have been input, the content of the second hierarchy commands is displayed.

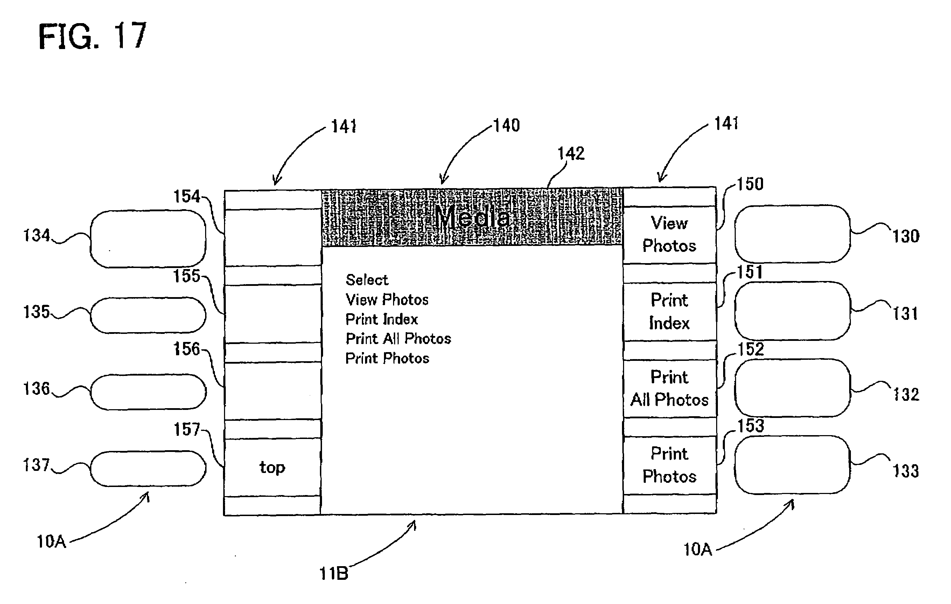

FIG. 17 shows the display device 11 in the case where the key 130 that corresponds to 'Media' has been operated in the waiting state. The media function is a function for inputting the image data stored in the memory card housed in the slot 8. The multi-function device 1 can print the image data that has been input. The content display region 140 and the key input display regions 141 are also present in the state shown in FIG. 17. The key input display regions 141 have the sub regions 150 to 157 that correspond to the keys 130 to 137. The sub regions 150 to 157 display the content of the second hierarchy commands that can be input by operating the keys 130 to 137.
A function display region 142 is formed above the content display region 140. The function display region 142 displays the contents of the first hierarchy commands. In FIG. 17, the function display region 142 is displaying 'Media'. The user can thus know that the media function is being executed.

The key input display regions 141 display 'View Photos', 'Print Index', 'Print All Photos', and Print Photos'. The user can select any out of these four commands. 'View Photos' is a function for displaying, on the LCD 11B, image data stored in the memory card. 'Print Index' is a function for printing the index of the image data stored in the memory card. 'Print All Photos' is a function for printing all the image data stored in the memory card. 'Print Photos' is a function for printing image data selected out of the image data stored in the memory card.
The sub region 157 is displaying 'top'. This means that the screen will return to the waiting state shown in FIG. 15 when the key 137 is operated.
Predetermined code signals are output from the controller 100 when any of the keys 130 to 133 are operated. Controls are executed that correspond to the code signals that were output. The aforementioned functions (View Photos, etc.) are thus executed. Further, a predetermined code signal is output from the controller 100 when the key 137 is operated. A control is executed that corresponds to the code signal that was output. The display device 11 thus moves to the waiting state (see FIG. 15).
In the present embodiment, both the first hierarchy commands and the second hierarchy commands are assigned to the keys 130 to 137. As a result, the number of keys can be reduced.

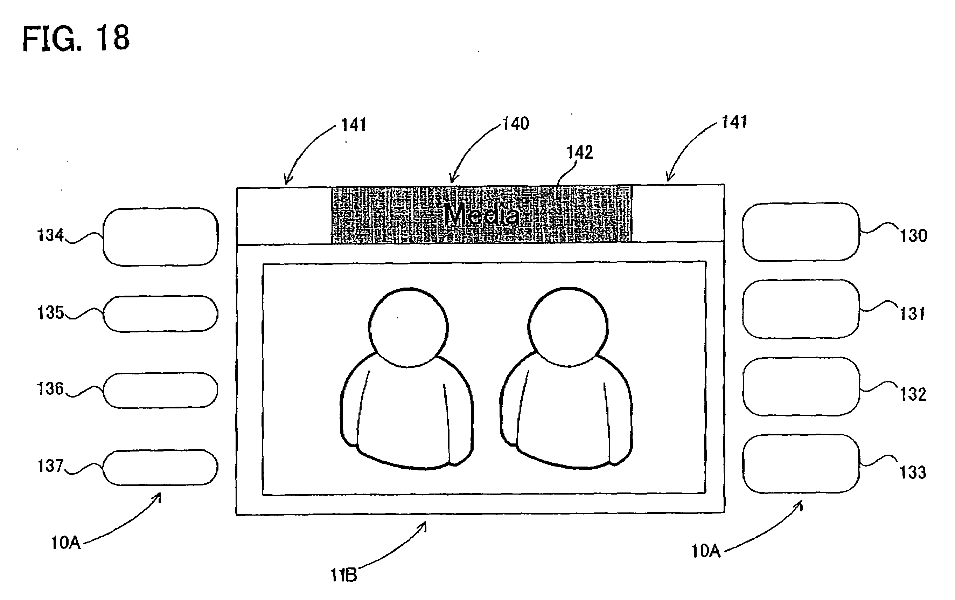

FIG. 18 shows the display device 11 in the case where the key 130 that corresponds to 'View Photos' in FIG. 17 has been operated. The content of the image data stored in the memory card is displayed on the LCD 11B. The function display region 142 displays 'Media'. The key input display regions 141 have no display. The content display region 140 extends in a horizontal direction. The display of the image data can be enlarged. The content display region 140 displays one item of image data out of a plurality of items of image data stored in the memory card. When a navigation key included in the operation key 10B (see FIG. 9) is operated, other items of image data are displayed in the content display region 140. Further, the display of the image data is halted when the stop key is operated.

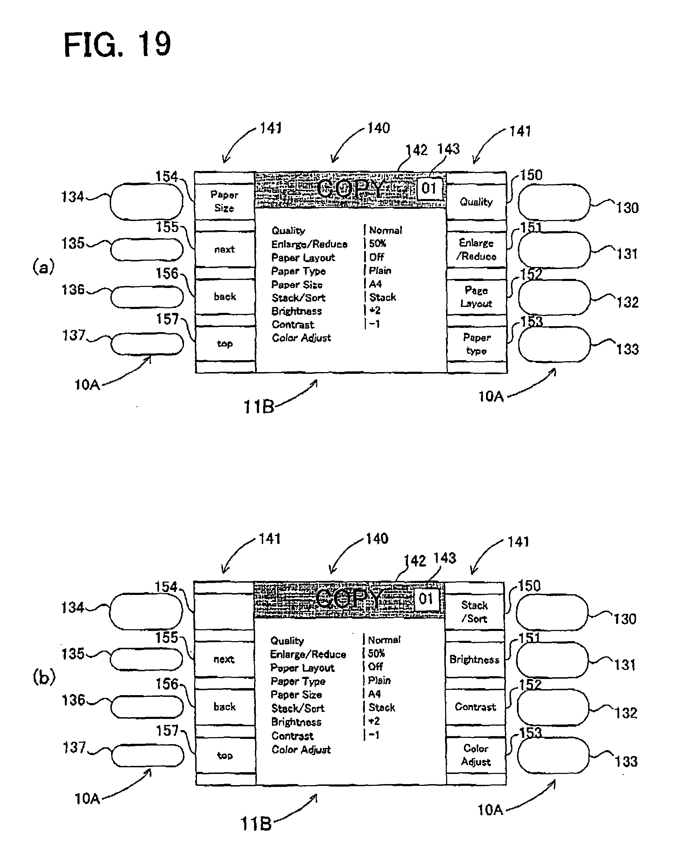

FIG. 19 (a) shows the display device 11 in the case where the key 131 that corresponds to 'COPY' in FIG. 15 has been operated. The copy function is a function for printing, by means of the recording device 2, an image that has been scanned by the scanning device 3. In the state shown in FIG. 19 (a), as well, the content display region 140 and the key input display regions 141 are present. The key input display regions 141 have the sub regions 150 to 157 that correspond to the keys 130 to 137. The sub regions 150 to 157 display the second hierarchy commands that can be input by operating the keys 130 to 137.
The copy function has nine types of second hierarchy commands, this being greater than the eight keys 130 to 137. As a result, the controller 100 (see FIG. 14) causes a part of the plurality of commands to be displayed in the sub regions 150 to 154 of FIG. 19 (a), and assigns these commands to the keys 130 to 134. Furthermore, the controller 100 causes the other part of the plurality of commands to be displayed in the sub regions 150 to 153 of FIG. 19 (b), and assigns these commands to the keys 130 to 133. The sub regions 155 and 156 of FIG. 19 (a) and 19 (b) display 'next' and 'back' for switching between the two screens. These commands correspond to the keys 135 and 136.
In the present embodiment, a plurality of commands of the same hierarchy correspond to one key. As a result, the number of keys can be reduced.

A predetermined code signal is output from the controller 100 when any out of the keys 130 to 134 in FIG. 19 (a) or FIG. 19 (b) is operated. The commands are executed that correspond to the code signals that were output Any of the settings can be determined by operating the navigation key included in the operation key 10B (see FIG. 9). Further, the number of sheets to be copied can be input by operating the dial key included in the key 10C (see FIG. 9). The number of sheets that has been input is displayed in a number of copies display region 143. When a start key included in the key 10B (see FIG. 9) is operated, the recording device 2 and the scanning device 3 execute copying.

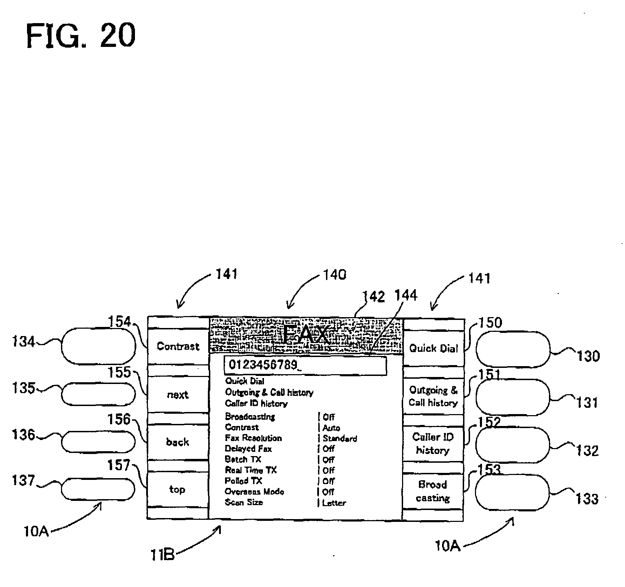

FIG. 20 shows the display device 11 in the case where the key 132 that corresponds to 'FAX' in FIG-15 has been operated. The fax function is a function for outputting, via a telephone circuit, image data that has been scanned by the scanning device 3 as fax data, and is a function for printing fax data using the recording device 2, this fax data having been received via a telephone circuit. In the state shown in FIG. 20, as well, the content display region 140 and the key input display regions 141 are present. The key input display regions 141 have the sub regions 150 to 157 that correspond to the keys 130 to 137. The sub regions 150 to 157 display the second hierarchy commands that can be input by operating the keys 130 to 137. The sub regions 155 and 156 display 'next' and 'back' for switching between the two screens. These commands correspond to the keys 135 and 136. When the keys 135 and 136 are operated, the content of the second hierarchy commands corresponding to the keys 130 to 134 is displayed.
A predetermined code signal is output from the controller 100 when any out of the keys 130 to 134 in FIG. 20 is operated. The commands are executed that correspond to the code signals that were output. Any of the settings can be determined by operating the navigation key included in the operation key 10B (see FIG. 9). Fax numbers can be input by operating the dial key included in the key 10C (see FIG. 9). The number that has been input is displayed in a fax number display region 144. When a start key included in the key 10B is operated, a fax can be sent via the scanning device 3.

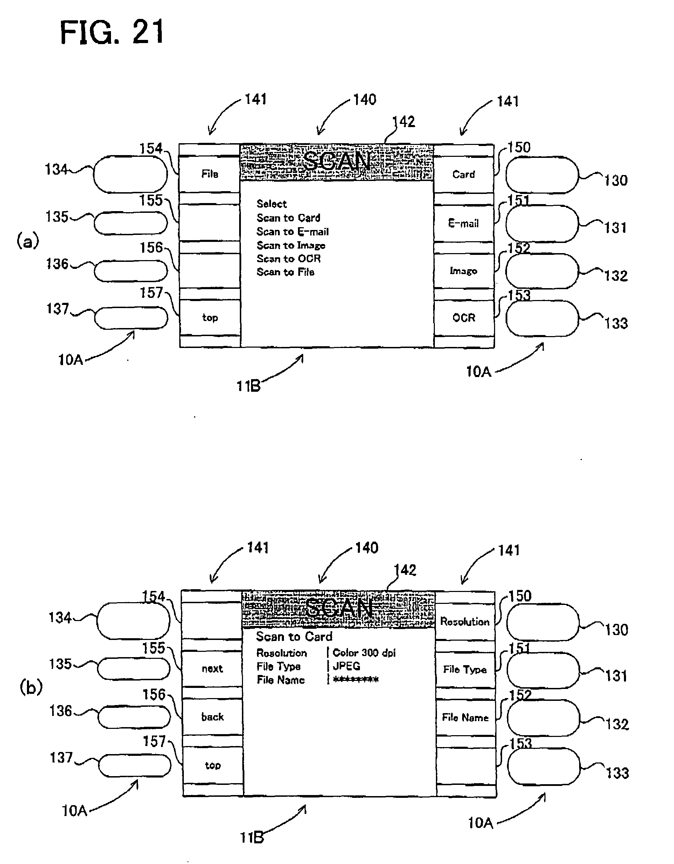

FIG. 21 (a) shows the display device 11 in the case where the key 133 that corresponds to 'SCAN' in FIG. 15 has been operated. The scan function is a function for scanning the image using the scanning device 3, and is a function for storing the image data of the scanned image in the memory card, or the like, housed in the slot 8. The content display region 140 and the key input display regions 141 axe present in the state shown in FIG. 21 (a) as well. The key input display regions 141 have the sub regions 150 to 157 that correspond to the keys 130 to 137. The sub regions 150 to 157 display the second hierarchy commands that can be input by operating the keys 130 to 137.
FIG. 21 (b) shows the display device 11 in the case where the key 130 that corresponds to 'Card' in FIG. 21 (a) has been operated. The image data of the image scanned by the scanning device 3 is stored in the memory card housed in the slot 8. The function display region 142 displays 'Scan'.
The content display region 140 displays the types of settings that can be input after 'Card' has been operated, and the current state. Specifically, the content display region 140 displays 'Resolution', 'File Type', and 'File Name'. When any of the keys 130 to 132 in FIG. 21 (b) is operated, a predetermined code signal is output from the controller 100. The commands are executed that correspond to the code signals that were output. Any of the settings can be determined by operating the navigation key included in the operation key 10B (see FIG. 9) or by operating the dial key included in the key 10C. When a start key included in the key 10C is operated, scanning can be executed by means of the scanning device 3.

In the present embodiment, the content of commands that can be input by operating the keys 130 to 137 is displayed in the key input display regions 141. The user can see the content of the commands corresponding to the keys 130 to 137 by looking at the key input display regions 141. Further, in the present embodiment, a plurality of commands are assigned to one key. As a result, the number of keys can be reduced. Space for disposing the keys 130 to 137 and the display device 11 can be reduced.
Each of the keys 130 to 137 may have a different color (green, orange, red, etc.). In this case, the sub regions 150 to 157 of the key input display regions 141 may have the same colors as the corresponding keys 130 to 137. If this is done, the user can easily ascertain the relationship between the keys 130 to 137 and the sub regions 150 to 157.
The keys 130 to 137 may be formed from transparent optical material and an LED. In this case, the keys 130 to 137 can be lit. The controller 100 (see FIG. 14) may light only the keys 130 to 137 in which commands can be input. For example, commands are not assigned to the keys 134 to 137 in FIG. 15. In this case, the keys 134 to 137 may not be lit, and the keys 130 to 133 may be lit. If this is done, the user can easily ascertain the keys 130 to 133 with which commands can be input.
In the present embodiment, the multi-function device 1 has four functions: the media function, the copy function, the fax function, and the scan function. However, not all these functions need be realized.

In the present embodiment, the scanning device 3 utilizes the CIS 67. Moreover, whichever position the display device 11 is in, the top end 11C of the display device 11 is lower than the top end 131 of the cover member 7, and the bottom end 11D of the display device 11 is higher than the bottom end 129 of the scanning device casing 5. The technique of the above embodiment realizes a scanning device that is low in height by means of utilizing the CIS 67 and the positioning of the display device 11.
Further, the CIS 67 is shorter in the scanning direction (the X direction of FIG. 1, etc.) than a CCD. As a result, the length of the scanning device casing 5 in the X direction can be reduced. In the present embodiment, as shown in FIG. 4, the length of the scanning device casing 5 in the X direction is substantially the same as the length in the X direction of the platen glass 60. The plan size of the multi-function device 1 can be reduced by utilizing the CIS 67.

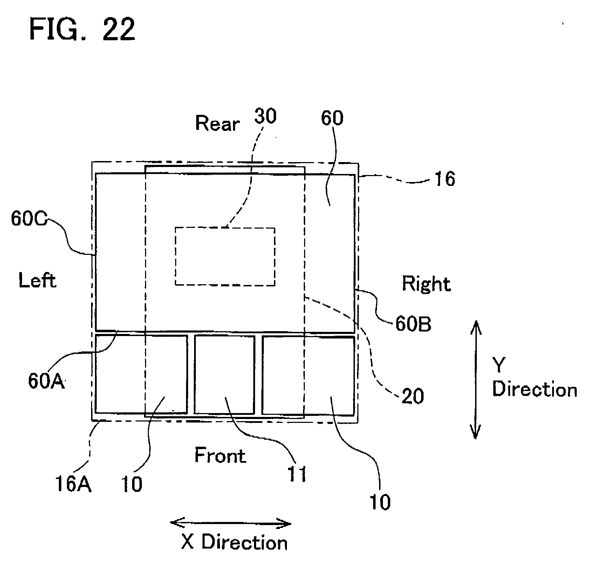

The multi-function device 1 of the present embodiment also has a well-conceived layout from a plan view. FIG. 22 shows a plan view of main members of the multi-function device 1.
The paper supply tray 20 has a rectangular shape that is long in the Y direction. The printing device 30 (the ink head 31A, the carriage 31B, etc.) overlaps with the paper supply tray 20. The platen glass 60 has a rectangular shape that is long in the X direction. The paper supply tray 20 and the platen glass 60 partially overlap. The platen glass 60 and the display device 11 do not overlap. The recording device casing 16 (the paper supply tray 20) extends beyond the platen glass 60 and protrudes at the front face side of the multi-function device 1. FIG. 22 shows the display device 11 in the lying position. Substantially the entire display device 11 is disposed between a front end 16A of the recording device casing 16 and a front end 60A of the platen glass 60. The length in the Y direction of the display device 11 is substantially the same as the length between the front end 16A of the recording device casing 16 and the front end 60A of the platen glass 60.
The platen glass 60 and the plurality of keys 10 do not overlap. All of the keys 10 are disposed between the front end 16A of the recording device casing 16 and the front end 60A of the platen glass 60. The length in the X direction of a region in which the display device 11 and the keys 10 are disposed is within the length in the X direction of the platen glass 60.

The longitudinal direction of the platen glass 60 is orthogonal to the longitudinal direction of the paper supply tray 20. As a result, the multi-function device 1 can be configured in a plan shape that is almost square. As shown in FIG. 22, the muiti-function device 1 has a substantially square shape from a plan view. The size of the multi-function device 1 is W373 x D347 x H165 (mm). W is a length in the X direction, D is a length in the Y direction, H is a length in the Z direction (see FIG. 1). Further, the length in the X direction of the platen glass 60 is 334 (mm). The length in the X direction of the multi-function device 1 is almost the same as the length in the X direction of the platen glass 60. This is realized by utilizing the CIS 67.
Since the multi-function device 1 has a substantially square shape from a plan view, a case into which the multi-function device 1 is packed also has a substantially square shape from a plan view. For example, container size specified by JISZ1618 and ISO0668 is L5867 x W2330 x H2350 (mm), or L11998 x W2330 x H2350 (mm). That is, the W ― H faces (faces defined by width and height) of the containers are substantially square. As a result, if the W ― H faces of the containers and the W - D faces (faces defined by width and depth)of the multi-function devices 1 conform, many multi-function devices 1 can be stacked efficiently in the containers. It is preferred that the length in the X direction (W) and the length in the Y direction (D) of the multi-function device 1 have a ratio in the range 1: 1 to 1.1: 1. If the lengths are within this range, the multi-function devices 1 can be stacked efficiently in containers.

In the multi-function device 1 of the present embodiment, a device whose plan shape is close to being square is utilized. Moreover, in the present technique, a space, which is the front side of the transparent plate 60 and is above the recording device 2, is formed. The operation panel 9 is disposed within this space. A compact multi-function device 1 can be realized by adopting this configuration.

## Claims

1. An image scanning device (3), comprising:
a transparent plate (60) on which an image medium having an image to be scanned is placed;
a contact image sensor (67) disposed below the transparent plate (60), the contact image sensor (67) scanning the image of the image medium placed on the transparent plate (60);
a scanning device casing (5) that houses the transparent plate (60) and the contact image sensor (67);
a cover member (7) that covers a top face of the transparent plate (60); and
a display device (11) capable of moving between a lying position and a standing position,
wherein, in a state where the display device (11) is positioned anywhere between the lying position and the standing position, a top end (11C) of the display device (11) is lower than a top end (131) of the cover member (7), and a bottom end (11D) of the display device (11) is higher than a bottom end (129) of the scanning device casing (5).

2. The image scanning device (3) as in claim 1, wherein,
in a state where the display device (11) is positioned in the lying position, the display device (11) is substantially parallel to the horizontal plane.

3. The image scanning device (3) as in claim 1 or 2, wherein,
in a state where the display device (11) is positioned in the standing position, the display device (11) is substantially parallel to the vertical plane.

4. The image scanning device (3) as in any one of claims 1 to 3, wherein
at least a part of the display device (11) is lower than the transparent plate (60).

5. The image scanning device (3) as in claim 4, wherein,
in a state where the display device (11) is positioned in the standing position, a part of the display device (11) is lower than the transparent plate (60), and the other part of the display device (11) is higher than the transparent plate (60).

6. The image scanning device (3) as in any one of claims 1 to 5, wherein
the display device (11) comprises a pivot axis (12) extending horizontally,
the display device (11) is capable of pivoting between the lying position facing upward and the standing position facing frontward.

7. The image scanning device (3) as in any one of claims 1 to 6, wherein
the cover member (7) comprises an auto document feeder device (6) that automatically feeds an image medium placed on the cover member (7) along the contact image sensor (67).

8. The image scanning device (3) as in any one of claims 1 to 7, further comprising:
a plurality of operation keys (10),
wherein an area where the operation keys (10) are disposed, and the display device (11) positioned in the lying position, are disposed on substantially the same plane.

9. The image scanning device (3) as in any one of claims 1 to 8, wherein
the display device (11) is capable of displaying image data input from an external device.

10. A multi-function device (1), comprising:
the image scanning device (3) as in any one of claims 1 to 9; and
an image recording device (2) capable of printing an image on a print medium,
wherein the image scanning device (3) is disposed above the image recording device (2).

11. The multi-function device (1) as in claim 10, wherein
the transparent plate (60) has a rectangular shape which is long in a left-right direction in the plan view of the multi-function device (1),
the contact image sensor (67) is capable of moving in the left-right direction in order to scan the image of the image medium placed on the transparent plate (60),
the image recording device (2) comprises a medium casing (20) capable of housing the print medium having a rectangular shape which is long in a front-rear direction in the plan view of the multi-function device (1), a transferring device (200) that transfers the print medium housed in the medium casing (20) in the front-rear direction and ejects the print medium to a front side of the multi-function device (1), a printing device (30) that prints the image on the print medium while the print medium is transferred by the transferring device (200), and a recording device casing (16) that houses the medium casing (20), the transferring device (200), and the printing device (30), and
in the plan view of the multi-function device (1),
(1) the medium casing (20) and the printing device (30) at least partially overlap,
(2) the medium casing (20) and the transparent plate (60) at least partially overlap,
(3) the transparent plate (60) and the display device (11) do not overlap,
(4) the recording device casing (16) protrudes beyond the transparent plate (60) toward the front side of the multi-function device (1), and
(5) at least a part of the display device (11) is disposed between a front end (16A) of the recording device casing (16) and a front end (60A) of the transparent plate (60).

12. The multi-function device (1) as in claim 11, wherein,
in the plan view of the multi-function device (1), the outline of the multi-function device (1) is a substantially square.

13. The multi-function device (1) as in claim 11, wherein
a length of the multi-function device (1) in the left-right direction and a length of the multi-function device (1) in the front-rear direction have a ratio in a range 1:1 to 1.1:1.

14. The multi-function device (1) as in any one of claims 11 to 13, wherein
the transferring device (200) transfers the print medium housed in the medium casing (20) from the front side to a rear side of the multi-function device (1), turns the print medium, transfers the print medium having been turned from the rear side to the front side, and ejects the print medium.

15. The multi-function device (1) as in any one of claims 11 to 14, wherein
the transferring device (200) is disposed between a front end of the medium casing (20) and a rear end of the medium casing (20).

16. The multi-function device (1) as in any one of claims 11 to 15, wherein
a rear face (5A) of the scanning device casing (5) and a rear face (16A) of the recording device casing (16) are substantially flush with each other, and these rear faces (5A, 16A) form a rear end of the multi-function device (1).

17. The multi-function device (1) as in any one of claims 11 to 16, wherein
in the plan view of the multi-function device (1), at least half of the display device (11) positioned in the lying position is disposed between the front end (16A) of the recording device casing (16) and the front end (60A) of the transparent plate (60).

18. The multi-function device (1) as in claim 17, wherein,
in the plan view of the multi-function device (1), substantially all of the display device (11) positioned in the lying position is disposed between the front end (16A) of the recording device casing (16) and the front end (60A) of the transparent plate (60).

19. The multi-function device (1) as in claim 18, wherein,
in the front-rear direction, a dimension of the display device (11) positioned in the lying position is substantially equal to a distance between the front end (16A) of the recording device casing (16) and the front end (60A) of the transparent plate (60).

20. The multi-function device (1) as in any one of claims 11 to 19, further comprising:
a slot (8) capable of housing a memory device,
wherein the display device (11) is capable of displaying image data stored in the memory device.

21. The multi-function device (1) as in claim 20, wherein
the image recording device (2) is capable of printing the displayed image data on the print medium.

22. The multi-function device (1) as in any one of claims 11 to 21, wherein
the image scanning device (3) further comprises a plurality of operation keys (10),
each operation key (10) is disposed above the image recording device (2), and
in the plan view of the multi-function device (1), the transparent plate (60) and the operation keys (10) do not overlap, and the operation keys (10) are disposed between the front end (16A) of the recording device casing (16) and the front end (60A) of the transparent plate (60).

23. The multi-function device (1) as in claim 22, wherein
in the left-right direction, a length of an area where the display device (11) and the operation keys (10) are disposed is within a length of the transparent plate (60).

24. The multi-function device (1) as in claim 22, wherein
at least two of the operation keys (10) are aligned along a right edge of the display device (11), and
at least two of the operation keys (10) are aligned along a left edge of the display device (11).

25. The multi-function device (1) as in claim 24, wherein
the display device (11) displays a content of a command that can be input by operating each operation key (10) at an adjacent area of each operation key (10).

26. The multi-function device (1) as in any one of claims 11 to 25, wherein
a maximum size of the image medium placed within the transparent plate (60) is substantially the same as a maximum size of the print medium that the medium casing (20) is capable of housing.

27. The multi-function device (I) as in claim 26, wherein
the maximum size of the print medium and the maximum size of the image medium are substantially 8.5 inch wide, which is equal to a short side of letter size, and substantially 297 mm long, which is equal to a long side of A4 size.
